(19) **Europäisches Patentamt / European Patent Office / Office européen des brevets**

(11) **EP 4 629 621 A1**

(12) **EUROPEAN PATENT APPLICATION**

(43) Date of publication:
08.10.2025 Bulletin 2025/41

(21) Application number: 24305533.2

(22) Date of filing: 04.04.2024

(51) International Patent Classification (IPC):
$H04N\ 19/105^{(2014.01)}$ $H04N\ 19/132^{(2014.01)}$
$H04N\ 19/186^{(2014.01)}$ $H04N\ 19/593^{(2014.01)}$
$H04N\ 19/82^{(2014.01)}$

(52) Cooperative Patent Classification (CPC):
H04N 19/105; H04N 19/117; H04N 19/132;
H04N 19/186; H04N 19/593; H04N 19/82

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• LE LEANNEC, Fabrice
35830 BETTON (FR)

• NASER, Karam
35250 MOUAZE (FR)
• POIRIER, Tangi
35235 THORIGNE-FOUILLARD (FR)
• URBAN, Fabrice
35235 THORIGNE-FOUILLARD (FR)
• UTIDA BARBOSA FERREIRA, Renan
MONTREAL, H1X3H7 (CA)

(74) Representative: Rittner, Karsten
Rittner & Partner
Patentanwälte mbB
Schiffgraben 17
30159 Hannover (DE)

(54) **INTERACTION BETWEEN ADAPTIVE DUAL TREE AND CROSS-COMPONENT CONVOLUTIONAL PREDICTION**

(57) Cross-component convolution mode (CCCM) may be enabled for a chroma prediction unit (PU) in a coding tree unit (CTU) with dual tree mode enabled. A device may determine a luma PU collocated with the chroma PU. The device may determine a set of reference luma samples associated with the chroma PU. The device may generate a modified set of reference luma samples by adding to the set of reference luma samples padding luma samples generated based on the set of reference luma samples. Padding luma samples may not be replaced by a previously reconstructed luma sample in the CTU. The device may generate a CCCM filter coefficient based on the modified set of reference luma samples. The device may predict the chroma PU based on the CCCM filter coefficient and the luma PU. The device may decode the CTU based on the predicted chroma PU.

FIG. 21

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

Systems, methods, and instrumentalities are disclosed for a device configured for one or more of video coding (e.g., encoding and/or decoding), distribution, or consumption.

In examples, a device (e.g., a decoder for video decoding) may determine that a cross-component convolution mode (CCCM) is enabled for a chroma prediction unit (PU) in a coding tree unit (CTU). For example, a dual tree mode may be enabled for the CTU. The device may determine a luma PU that is collocated with the chroma PU. The device may determine a set of reference luma samples associated with the chroma PU. The device may add a plurality of padding luma samples to the set of reference luma samples to generate a modified set of reference luma samples. For example, the plurality of padding luma samples may be generated based on one or more reference luma samples of the set of reference luma samples. For example, a padding luma sample of the plurality of padding luma samples may not be replaced by a previously reconstructed luma sample in the CTU. The device may generate a CCCM filter coefficient, for example, based on the modified set of reference luma samples. The device may predict the chroma PU based on the CCCM filter coefficient and the luma PU. The device may decode the CTU based on the predicted chroma PU.

In examples, a device (e.g., an encoder for video encoding) may determine that a cross-component convolution mode (CCCM) is enabled for a chroma prediction unit (PU) in a coding tree unit (CTU). For example, a dual tree mode may be enabled for the CTU. The device may determine a luma PU that is collocated with the chroma PU. The device may determine a set of reference luma samples associated with the chroma PU. The device may add a plurality of padding luma samples to the set of reference luma samples to generate a modified set of reference luma samples. For example, the plurality of padding luma samples may be generated based on one or more reference luma samples of the set of reference luma samples. For example, a padding luma sample of the plurality of padding luma samples may not be replaced by a previously reconstructed luma sample in the CTU. The device may generate a CCCM filter coefficient, for example, based on the modified set of reference luma samples. The device may predict the chroma PU based on the CCCM filter coefficient and the luma PU. The device may encode the CTU based on the predicted chroma PU.

In examples, the CTU may be in a slice. The device may determine that the dual tree mode is enabled for the CTU comprising the chroma PU. The device may determine that the slice is not an intra-slice. The device may (e.g., based on a determination that the dual tree mode is enabled for the CTU and the determination that the slice is not the intra-slice) disable a replacement of the padding luma sample of the plurality of padding luma samples with the previously reconstructed luma sample in the CTU. For example, the chroma PU may be predicted based on the disablement of the replacement of the padding luma sample of the plurality of padding luma samples.

In examples, the device may determine that the dual tree mode is enabled for a CTU comprising a chroma PU, wherein the CTU is in a slice. The device may determine a set of reference luma samples in the CTU. The device may add a plurality of padding luma samples to the set of reference luma samples in the CTU. For example, the plurality of padding luma samples may be generated based on the one or more reference luma samples of the set of reference luma samples in the CTU. The device may determine that the slice is an intra-slice. The device may (e.g., based on a determination that the dual tree mode is enabled for the CTU and the determination that the slice is the intra-slice) modify the plurality of padding luma samples, for example, by replacing a padding luma sample of the plurality of padding luma samples with a previously reconstructed luma sample in the CTU. The device may predict the chroma PU based on the set of reference luma samples in the CTU and the modified plurality of padding luma samples. The CTU may be the same CTU as or a different CTU (e.g., second CTU) from the CTU in one or more examples as described herein.

In examples, the device may determine that the dual tree mode is enabled for a CTU comprising a chroma PU, wherein the CTU is in a slice. The device may determine a set of reference luma samples in the CTU. The device may add a plurality of padding luma samples to the set of reference luma samples in the CTU. For example, the plurality of padding luma samples may be generated based on one or more reference luma samples of the set of reference luma samples in the CTU. The device may determine that the slice is an intra-slice. The device may determine that the chroma PU and a padding luma sample of the plurality of padding luma samples are located within a virtual pipeline decoding unit (VPDU). The device may (e.g., based on a determination that the dual tree mode is enabled for the CTU, the determination that the slice is the intra-slice, and the determination that the chroma PU and the padding luma sample of the plurality of padding luma samples are located within the VPDU), modify the plurality of padding luma samples, for example, by replacing the padding luma sample of the plurality of padding luma samples with a previously reconstructed luma sample in the VPDU.

The device may predict the chroma PU based on the set of reference luma samples in the CTU and the modified plurality of padding luma samples. The CTU may be the same CTU as or a different CTU (e.g., second CTU) from the CTU in one or more examples as described herein.

In examples, the device may determine that the dual tree mode is enabled for a CTU comprising a chroma PU. The device may determine whether a local dual tree mode is enabled for the chroma PU in the CTU. For example, in the local dual tree mode, the dual tree mode may not be enabled for an entirety of the CTU. For example, the dual tree mode may be enabled for a region within the CTU. The device may (e.g., based on a determination that the local dual tree mode is enabled for the chroma PU in the CTU) determine the region for which the dual tree mode is enabled, wherein the region is within the chroma PU. The device may determine a set of reference luma samples in the CTU. The device may add a plurality of padding luma samples to the set of reference luma samples in the CTU, wherein the plurality of padding luma samples is generated based on one or more reference luma samples of the set of reference luma samples in the CTU. The device may (e.g., based on a determination that the chroma PU in the CTU is in the determined region within the CTU) modify the plurality of padding luma samples by replacing a padding luma sample of the plurality of padding luma samples with a previously reconstructed luma sample in the region within the CTU. The device may predict the chroma PU based on the set of reference luma samples in the CTU and the modified plurality of padding luma samples. In some examples, the device may determine a multiple type tree (MTT) partition depth associated with the local dual tree mode. For example, the region within the CTU may be determined (e.g., further) based on the MTT partition depth. The CTU may be the same CTU as or a different CTU (e.g., second CTU) from the CTU in one or more examples as described herein.

In examples, the device may determine that the dual tree mode is enabled for a CTU comprising a chroma PU. The device may determine whether a local dual tree mode is enabled for the chroma PU in the CTU. For example, in the local dual tree mode, the dual tree mode may not be enabled for an entirety of the CTU. For example, the dual tree mode may be enabled for a region within the CTU. The device may be based on a determination that the local dual tree mode is not enabled for the chroma PU in the CTU, determine the region for which the dual tree mode is enabled as the CTU. The device may determine a set of reference luma samples in the CTU. The device may add a plurality of padding luma samples to the set of reference luma samples in the CTU. For example, the plurality of padding luma samples may be generated based on one or more reference luma samples of the set of reference luma samples in the CTU. The device may modify the plurality of padding luma samples, for example, by replacing a padding luma sample of the plurality of padding luma samples with a previously reconstructed luma sample in the CTU. The device may predict the chroma PU based on the set of reference luma samples in the CTU and the modified plurality of padding luma samples. The CTU may be the same CTU as or a different CTU (e.g., second CTU) from the CTU in one or more examples as described herein.

In examples, the set of reference luma samples associated with the chroma PU may be determined based on a block vector associated with the CTU.

In examples, the device may determine that a cross-component prediction (CCP) merge mode is enabled for a chroma PU in a CTU. For example, a dual tree mode may be enabled for the CTU. The device may determine a luma PU that is collocated with the chroma PU. For example, the luma PU may comprise a set of luma samples. The device may determine a set of reference luma samples based on a previously decoded video block in the CTU. The device may generate a CCCM filter coefficient based on the set of reference luma samples. The device may add a plurality of padding luma samples to the set of luma samples of the luma PU to generate a modified set of luma samples. For example, the plurality of padding luma samples may be generated based on one or more luma samples of the set of luma samples of the luma PU. For example, a padding luma sample of the plurality of padding luma samples may not be replaced by a previously reconstructed luma sample in the CTU. The device may predict the chroma PU in the CTU based on the CCCM filter coefficient and the modified set of luma samples in the CTU. The device may decode the CTU based on the predicted chroma PU in the CTU. The CTU may be the same CTU as or a different CTU (e.g., second CTU) from the CTU in one or more examples as described herein.

In examples, the device may determine a plurality of coordinates associated with a reference area of the chroma PU. For example, the set of reference luma samples may be determined based on the plurality of coordinates associated with the reference area and by downsampling previously reconstructed luma samples. The device may determine a plurality of locations including right of top, right of left, below left, below right of the reference area. For example, the plurality of locations may be within the CTU. For example, the plurality of padding luma samples may be generated for the plurality of locations and by duplicating the one or more reference luma samples of the set of reference luma samples. For example, the chroma PU may be predicted by applying the CCCM filter coefficient on a set of luma samples associated with the chroma PU. For example, the set of luma samples may be determined by downsampling the luma PU based on a chroma format associated with the CTU.

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a system in which various aspects and examples may be implemented.

FIG. 5 illustrates an example of Coding Tree Unit and Coding Tree concepts to represent a compressed picture.

FIG. 6 illustrates an example of division of a Coding Tree Unit into Coding Units, Prediction Units, and Transform Units.

FIG. 7 illustrates an example of Partitioning of Coding Units into Prediction Units.

FIG. 8 illustrates an example of Quad-Tree Plus Binary-Tree (QTBT) CTU representation.

FIG. 9 illustrates an example of Horizontal (e.g., HOR_TRIPLE) and Vertical (e.g., VER_TRIPLE) Triple Tree Coding Unit splitting modes.

FIG. 10 illustrates an example of a set of Coding Unit splitting modes supported in video coding.

FIG. 11 illustrates an example showing separate tree signaling in inter slices.

FIG. 12 illustrates an example of a spatial part of the convolutional filter.

FIG. 13 illustrates an example of a reference area (e.g., with padding) that may be used to derive the filter coefficients.

FIG. 14 illustrates an example of Four Sobel based gradient patterns for GLM.

FIG. 15 illustrates an example of the spatial part of the GL-CCCM convolutional filter.

FIG. 16 illustrates an example of the spatial part of the non-down sampled CCCM luma terms that may be used for convolutional filter.

FIG. 17 illustrates an example of down-sampling filters.

FIG. 18 illustrates an example of a reference area for BVG-CCCM.

FIG. 19 illustrates an example of a process (e.g., an overall process) to predict a chroma PU through cross-component convolutional filtering.

FIG. 20 illustrates an example of the computation of reference and co-located luma samples of a PU for cross-component convolution filter derivation and application.

FIG. 21 illustrates an example of providing interaction between dual-tree and the computation of reference and co-located luma samples used for CCCM filter derivation and application.

FIG. 22 illustrates an example of slice type based interaction between dual-tree and the computation of reference and co-located luma samples used for CCCM filter derivation and application.

FIG. 23 illustrates an example of applying a Virtual Pipeline Decoding Unit (VPDU) constraint to override padding samples.

FIG. 24 illustrates an example of local dual-tree region based computation of reference and co-located luma samples that may be used for CCCM filter derivation and application.

## DETAILED DESCRIPTION

A more detailed understanding may be had from the following description, given by way of example in conjunction with the accompanying drawings.

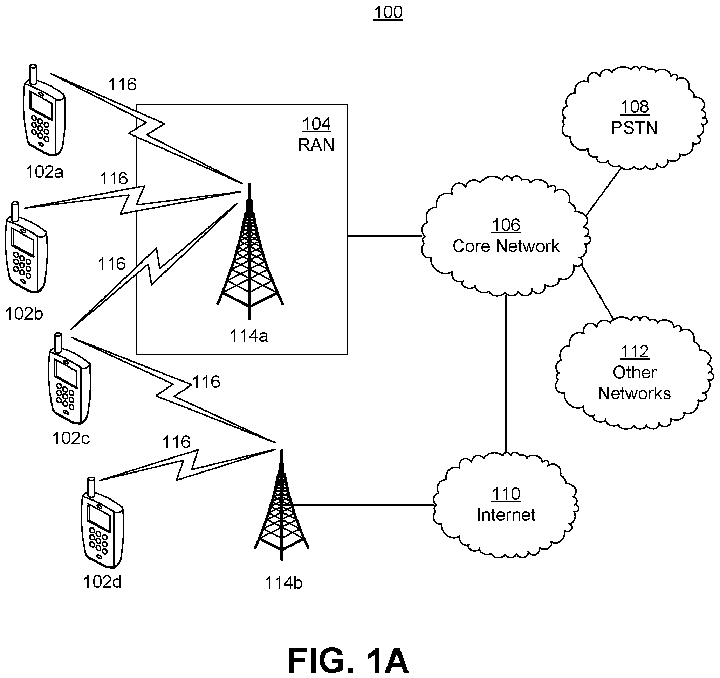

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

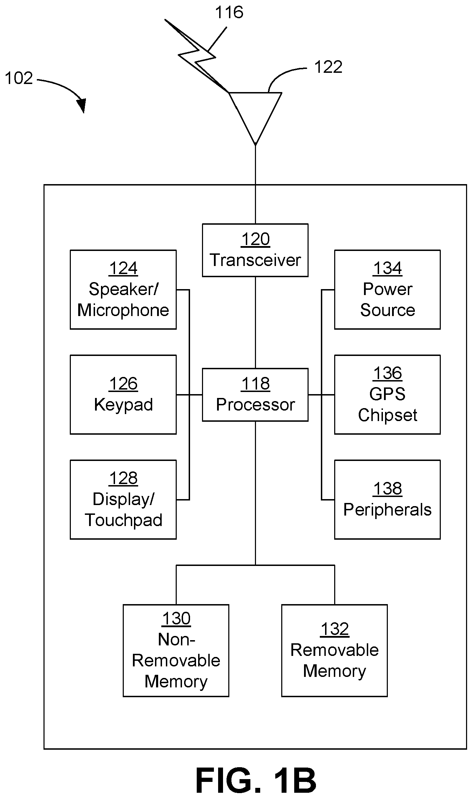

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

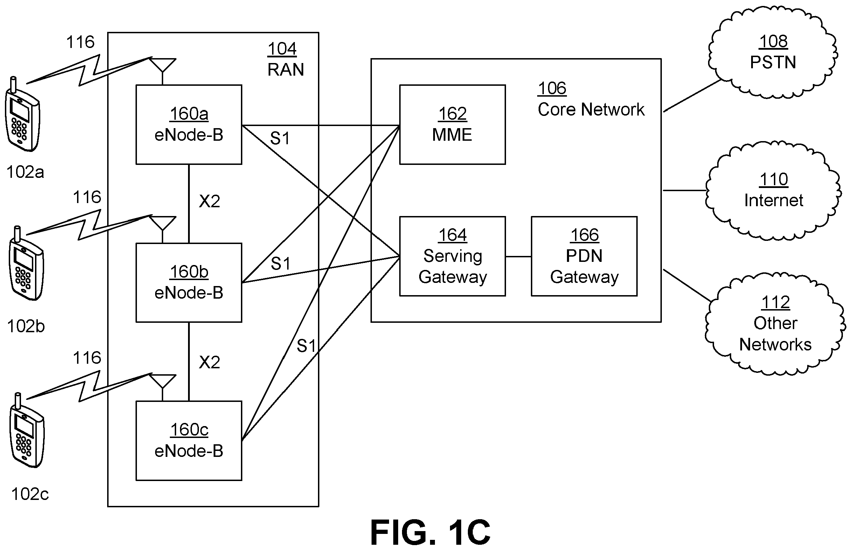

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

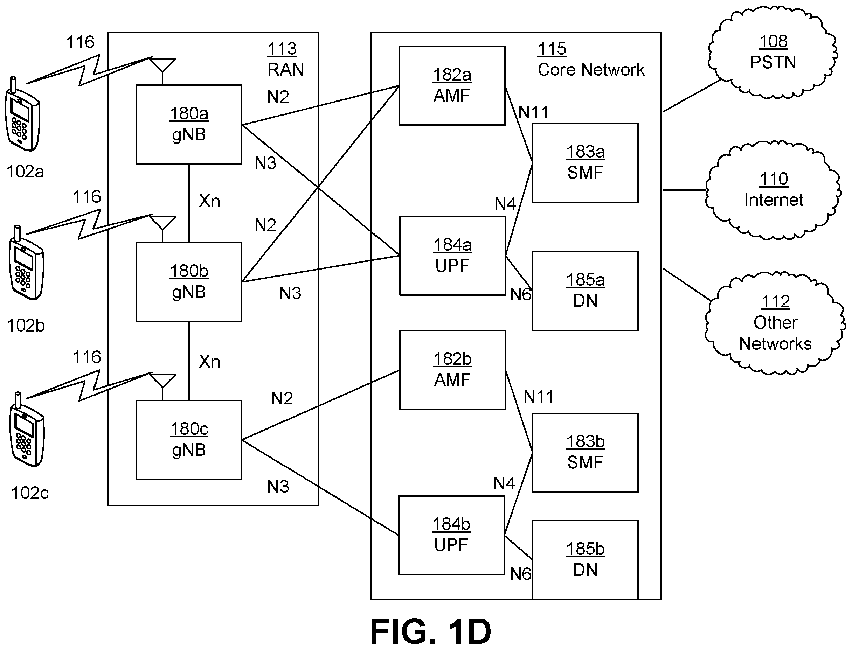

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

**EP 4 629 621 A1**

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

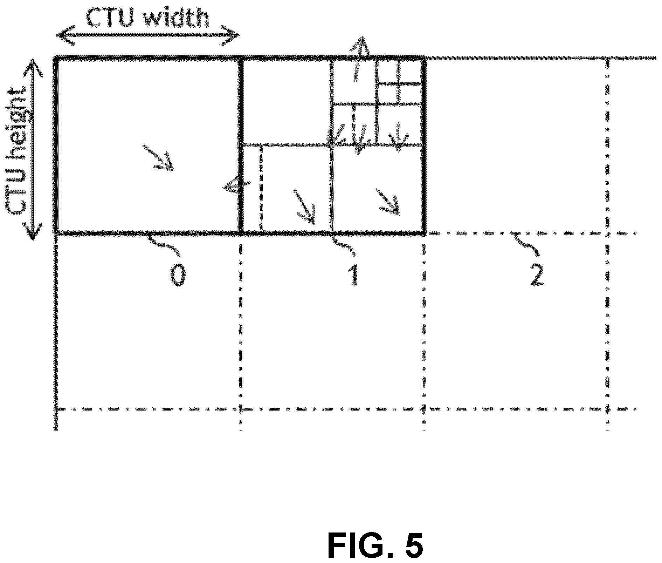

The aspects described and contemplated in this application may be implemented in many different forms. FIGS. 5-24 described herein may provide some examples, but other examples are contemplated. The discussion of FIGS. 5-24 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

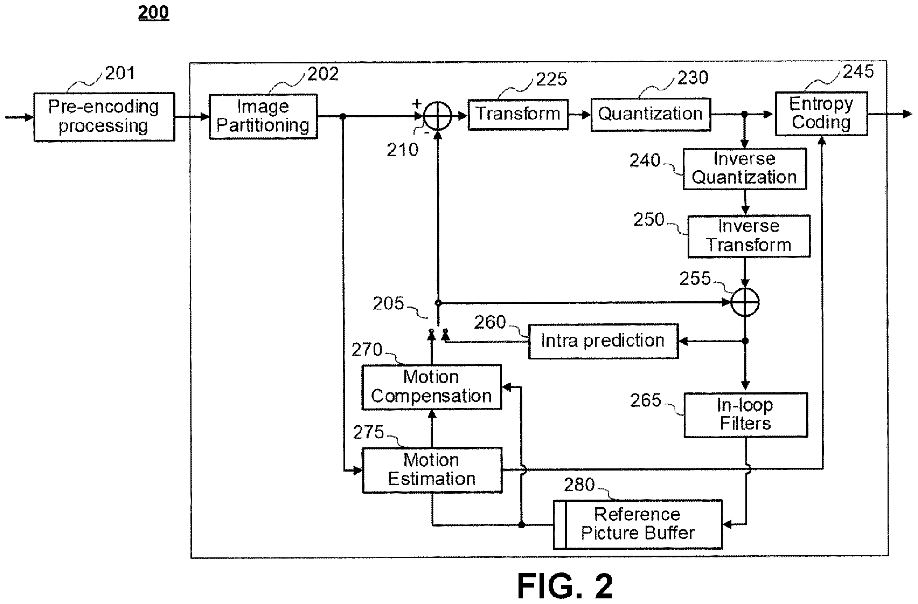

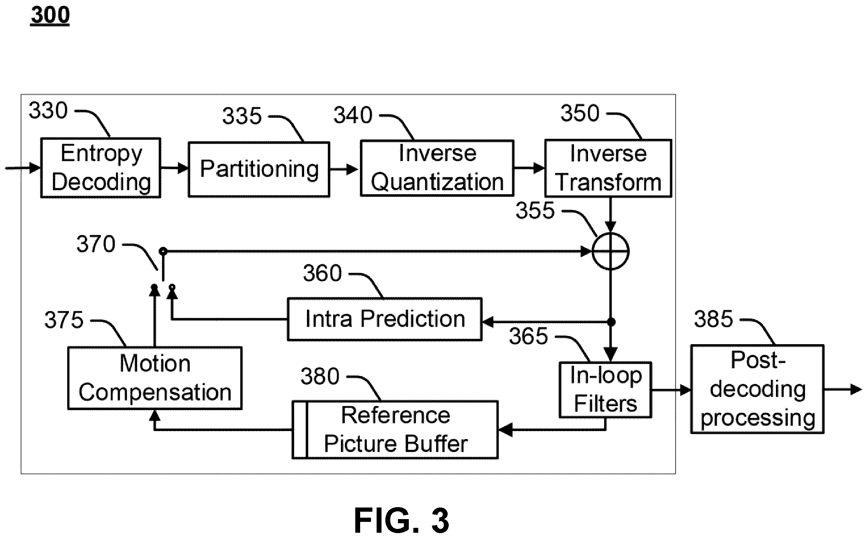

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as chroma format (e.g., 4:2:0, 4:2:2, 4:4:4), block sizes or coding unit sizes (e.g., height, width), partition dimensions, number of search areas, number of sub areas or regions, search step sizes, number of reconstructed blocks, number of entries in a list, precision, number of directions, number of modes, number of candidates, candidate ordering, number of samples, number of references, bit values, sub-block sizes, number of parameters, multiplier values, constant values, range values, minimum values, maximum values, threshold values, index values, number of prediction modes, number of reference lines, index values, flag values, weight values, scaling parameter values, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, such as picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filtering) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). In some examples (e.g., for a given picture) the contents of the reference picture buffer 380 on the decoder 300 side may be identical to the contents of the reference picture buffer 280 on the encoder 200 side (e.g., for the same picture).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

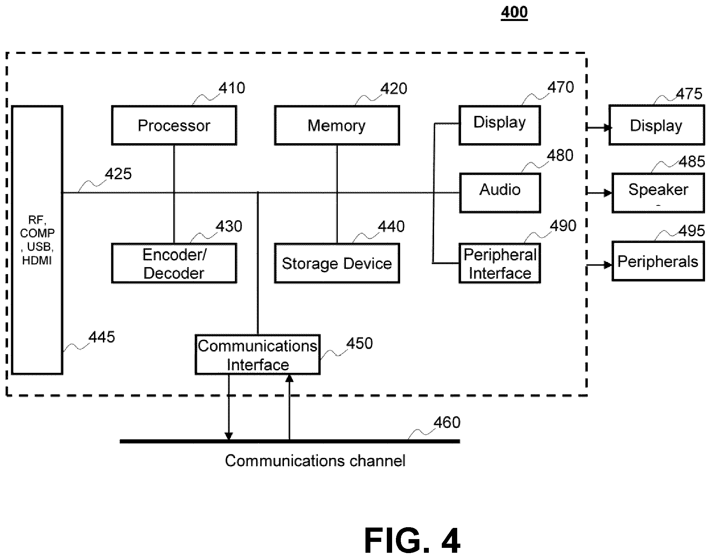

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example,

determining that a cross-component convolution mode (CCCM) is enabled for a chroma prediction unit (PU) in a coding tree unit (CTU), wherein a dual tree mode is enabled for the CTU; determining a luma PU that is collocated with the chroma PU; determining a set of reference luma samples associated with the chroma PU; adding a plurality of padding luma samples to the set of reference luma samples to generate a modified set of reference luma samples ( e.g., where the plurality of padding luma samples may be generated based on one or more reference luma samples of the set of reference luma samples, and/or where a padding luma sample of the plurality of padding luma samples may not be replaced by a previously reconstructed luma sample in the CTU); generating a CCCM filter coefficient based on the modified set of reference luma samples; predicting the chroma PU based on the CCCM filter coefficient and the luma PU; decoding the CTU based on the predicted chroma PU, etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, determining that a cross-component convolution mode (CCCM) is enabled for a chroma prediction unit (PU) in a coding tree unit (CTU), wherein a dual tree mode is enabled for the CTU; determining a luma PU that is collocated with the chroma PU; determining a set of reference luma samples associated with the chroma PU; adding a plurality of padding luma samples to the set of reference luma samples to generate a modified set of reference luma samples (e.g., where the plurality of padding luma samples may be generated based on one or more reference luma samples of the set of reference luma samples, and/or where a padding luma sample of the plurality of padding luma samples may not be replaced by a previously reconstructed luma sample in the CTU); generating a CCCM filter coefficient based on the modified set of reference luma samples; predicting the chroma PU based on the CCCM filter coefficient and the luma PU; encoding the CTU based on the predicted chroma PU, etc.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, such as bitDepth, predChromaVal , predChroma, LMCMode flag, cclmFlag, mmlmFlag, cccmFlag, cccmNoSubFlag, glCccmFlag, glmFla, etc. are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, residual signals, metadata, coding or motion representation modes and related signals (e.g., ITMP-related flags, LIC-related flags), partitioning modes, reference pictures, motion vector predictors (MVPs), motion vector differences (MVDs), indices, candidate lists, prediction modes, merge modes, filter models, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

Systems, methods, and instrumentalities are disclosed for a device configured for one or more of video coding (e.g., encoding and/or decoding), distribution, or consumption.

In examples, a device (e.g., a decoder for video decoding) may determine that a cross-component convolution mode (CCCM) is enabled for a chroma prediction unit (PU) in a coding tree unit (CTU). For example, a dual tree mode may be enabled for the CTU. The device may determine a luma PU that is collocated with the chroma PU. The device may determine a set of reference luma samples associated with the chroma PU. The device may add a plurality of padding luma samples to the set of reference luma samples to generate a modified set of reference luma samples. For example, the plurality of padding luma samples may be generated based on one or more reference luma samples of the set of reference luma samples. For example, a padding luma sample of the plurality of padding luma samples may not be replaced by a previously reconstructed luma sample in the CTU. The device may generate a CCCM filter coefficient, for example, based on the modified set of reference luma samples. The device may predict the chroma PU based on the CCCM filter coefficient and the luma PU. The device may decode the CTU based on the predicted chroma PU.

In examples, a device (e.g., an encoder for video encoding) may determine that a cross-component convolution mode (CCCM) is enabled for a chroma prediction unit (PU) in a coding tree unit (CTU). For example, a dual tree mode may be enabled for the CTU. The device may determine a luma PU that is collocated with the chroma PU. The device may determine a set of reference luma samples associated with the chroma PU. The device may add a plurality of padding luma samples to the set of reference luma samples to generate a modified set of reference luma samples. For example, the plurality of padding luma samples may be generated based on one or more reference luma samples of the set of reference luma samples. For example, a padding luma sample of the plurality of padding luma samples may not be replaced by a previously reconstructed luma sample in the CTU. The device may generate a CCCM filter coefficient, for example, based on the modified set of reference luma samples. The device may predict the chroma PU based on the CCCM filter coefficient and the luma PU. The device may encode the CTU based on the predicted chroma PU.

In examples, the CTU may be in a slice. The device may determine that the dual tree mode is enabled for the CTU comprising the chroma PU. The device may determine that the slice is not an intra-slice. The device may (e.g., based on a determination that the dual tree mode is enabled for the CTU and the determination that the slice is not the intra-slice)

disable a replacement of the padding luma sample of the plurality of padding luma samples with the previously reconstructed luma sample in the CTU. For example, the chroma PU may be predicted based on the disablement of the replacement of the padding luma sample of the plurality of padding luma samples.

In examples, the device may determine that the dual tree mode is enabled for a CTU comprising a chroma PU, wherein the CTU is in a slice. The device may determine a set of reference luma samples in the CTU. The device may add a plurality of padding luma samples to the set of reference luma samples in the CTU. For example, the plurality of padding luma samples may be generated based on the one or more reference luma samples of the set of reference luma samples in the CTU. The device may determine that the slice is an intra-slice. The device may (e.g., based on a determination that the dual tree mode is enabled for the CTU and the determination that the slice is the intra-slice) modify the plurality of padding luma samples, for example, by replacing a padding luma sample of the plurality of padding luma samples with a previously reconstructed luma sample in the CTU. The device may predict the chroma PU based on the set of reference luma samples in the CTU and the modified plurality of padding luma samples. The CTU may be the same CTU as or a different CTU (e.g., second CTU) from the CTU in one or more examples as described herein.

In examples, the device may determine that the dual tree mode is enabled for a CTU comprising a chroma PU, wherein the CTU is in a slice. The device may determine a set of reference luma samples in the CTU. The device may add a plurality of padding luma samples to the set of reference luma samples in the CTU. For example, the plurality of padding luma samples may be generated based on one or more reference luma samples of the set of reference luma samples in the CTU. The device may determine that the slice is an intra-slice. The device may determine that the chroma PU and a padding luma sample of the plurality of padding luma samples are located within a virtual pipeline decoding unit (VPDU). The device may (e.g., based on a determination that the dual tree mode is enabled for the CTU, the determination that the slice is the intra-slice, and the determination that the chroma PU and the padding luma sample of the plurality of padding luma samples are located within the VPDU), modify the plurality of padding luma samples, for example, by replacing the padding luma sample of the plurality of padding luma samples with a previously reconstructed luma sample in the VPDU. The device may predict the chroma PU based on the set of reference luma samples in the CTU and the modified plurality of padding luma samples. The CTU may be the same CTU as or a different CTU (e.g., second CTU) from the CTU in one or more examples as described herein.

In examples, the device may determine that the dual tree mode is enabled for a CTU comprising a chroma PU. The device may determine whether a local dual tree mode is enabled for the chroma PU in the CTU. For example, in the local dual tree mode, the dual tree mode may not be enabled for an entirety of the CTU. For example, the dual tree mode may be enabled for a region within the CTU. The device may (e.g., based on a determination that the local dual tree mode is enabled for the chroma PU in the CTU) determine the region for which the dual tree mode is enabled, wherein the region is within the chroma PU. The device may determine a set of reference luma samples in the CTU. The device may add a plurality of padding luma samples to the set of reference luma samples in the CTU, wherein the plurality of padding luma samples is generated based on one or more reference luma samples of the set of reference luma samples in the CTU. The device may (e.g., based on a determination that the chroma PU in the CTU is in the determined region within the CTU) modify the plurality of padding luma samples by replacing a padding luma sample of the plurality of padding luma samples with a previously reconstructed luma sample in the region within the CTU. The device may predict the chroma PU based on the set of reference luma samples in the CTU and the modified plurality of padding luma samples. In some examples, the device may determine a multiple type tree (MTT) partition depth associated with the local dual tree mode. For example, the region within the CTU may be determined (e.g., further) based on the MTT partition depth. The CTU may be the same CTU as or a different CTU (e.g., second CTU) from the CTU in one or more examples as described herein.

In examples, the device may determine that the dual tree mode is enabled for a CTU comprising a chroma PU. The device may determine whether a local dual tree mode is enabled for the chroma PU in the CTU. For example, in the local dual tree mode, the dual tree mode may not be enabled for an entirety of the CTU. For example, the dual tree mode may be enabled for a region within the CTU. The device may be based on a determination that the local dual tree mode is not enabled for the chroma PU in the CTU, determine the region for which the dual tree mode is enabled as the CTU. The device may determine a set of reference luma samples in the CTU. The device may add a plurality of padding luma samples to the set of reference luma samples in the CTU. For example, the plurality of padding luma samples may be generated based on one or more reference luma samples of the set of reference luma samples in the CTU. The device may modify the plurality of padding luma samples, for example, by replacing a padding luma sample of the plurality of padding luma samples with a previously reconstructed luma sample in the CTU. The device may predict the chroma PU based on the set of reference luma samples in the CTU and the modified plurality of padding luma samples. The CTU may be the same CTU as or a different CTU (e.g., second CTU) from the CTU in one or more examples as described herein.

In examples, the set of reference luma samples associated with the chroma PU may be determined based on a block vector associated with the CTU.

In examples, the device may determine that a cross-component prediction (CCP) merge mode is enabled for a chroma PU in a CTU. For example, a dual tree mode may be enabled for the CTU. The device may determine a luma PU that is collocated with the chroma PU. For example, the luma PU may comprise a set of luma samples. The device may determine a set of reference luma samples based on a previously decoded video block in the CTU. The device may generate a CCCM filter coefficient based on the set of reference luma samples. The device may add a plurality of padding luma samples to the set of luma samples of the luma PU to generate a modified set of luma samples. For example, the plurality of padding luma samples may be generated based on one or more luma samples of the set of luma samples of the luma PU. For example, a padding luma sample of the plurality of padding luma samples may not be replaced by a previously reconstructed luma sample in the CTU. The device may predict the chroma PU in the CTU based on the CCCM filter coefficient and the modified set of luma samples in the CTU. The device may decode the CTU based on the predicted chroma PU in the CTU. The CTU may be the same CTU as or a different CTU (e.g., second CTU) from the CTU in one or more examples as described herein.

In examples, the device may determine a plurality of coordinates associated with a reference area of the chroma PU. For example, the set of reference luma samples may be determined based on the plurality of coordinates associated with the reference area and by downsampling previously reconstructed luma samples. The device may determine a plurality of locations including right of top, right of left, below left, below right of the reference area. For example, the plurality of locations may be within the CTU. For example, the plurality of padding luma samples may be generated for the plurality of locations and by duplicating the one or more reference luma samples of the set of reference luma samples. For example, the chroma PU may be predicted by applying the CCCM filter coefficient on a set of luma samples associated with the chroma PU. For example, the set of luma samples may be determined by downsampling the luma PU based on a chroma format associated with the CTU.

A block structure may be implemented in video coding. For example, a picture may be divided into Coding Tree Units (CTUs). The size of a CTU may be, for example, 64x64, 128x128, or 256x256 pixels.

A (e.g., each) CTU may be represented by a Coding Tree in the compressed domain. Quad-tree division of the CTU may create leaves, where a (e.g., each) leaf may be referred to as a Coding Unit (CU). An example is shown in FIG. 5.

FIG. 5 illustrates an example of Coding Tree Unit and Coding Tree concepts to represent a compressed picture.

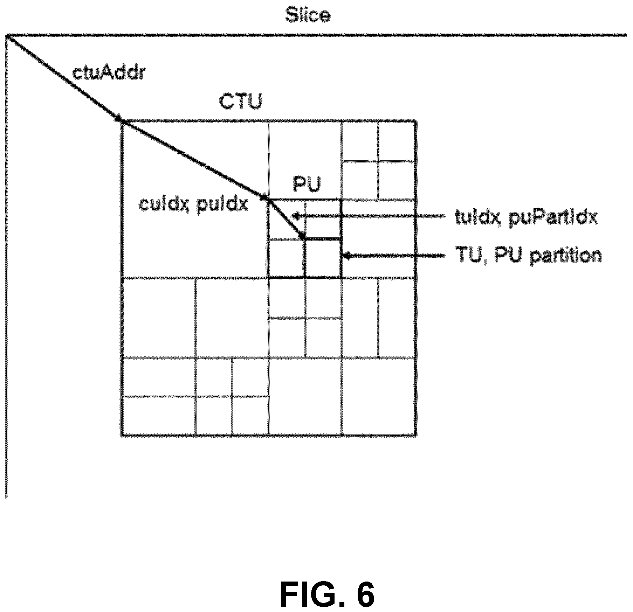

A (e.g., each) CU may be given Intra and/or Inter prediction parameters (e.g., Prediction Info). A CU may be spatially partitioned into one or more Prediction Units (PUs). A (e.g., each) PU may be assigned prediction information. An Intra or Inter coding mode may be assigned on a CU level. An example is shown in FIG. 6.

FIG. 6 illustrates an example of division of a Coding Tree Unit into Coding Units, Prediction Units, and Transform Units.

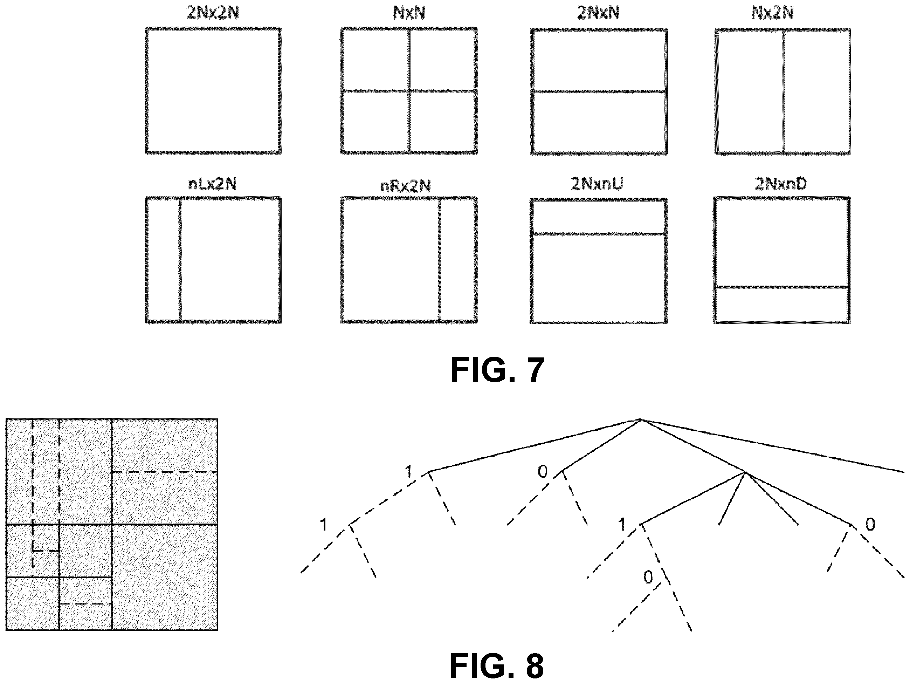

The Partitioning of a Coding Unit into Prediction Unit(s) may be done, for example, according to the partition type, which may be signaled in the bit-stream. An intra coding unit may use (e.g., only) the partition types 2Nx2N and NxN, as illustrated by example in FIG. 7. Square PUs (e.g., only square PUs) may be used in Intra Coding Units.

Inter Coding Units may use square and/or rectangular partition types. For example, inter coding units may use (e.g., all) the partition types shown by example in FIG. 7.

FIG. 7 illustrates an example of Partitioning of Coding Units into Prediction Units.

Coding Units may (e.g., also) be divided into transform units, e.g., in a recursive way, for example, following a "transform tree." A transform tree may be a quad-tree division of a coding unit. Transform units may be the leaf of the transform tree. A transform unit may encapsulate the square transform blocks of a (e.g., each) picture component corresponding to a considered square spatial area. A transform block may be a square block of samples in a single component, for example, where the same transform is applied.

A Coding Tree Unit representation in the compressed domain may represent picture data in a more flexible way. An advantage of flexible representation of the coding tree may be increased compression efficiency compared to the CU/PU/TU arrangement.

FIG. 8 illustrates an example of Quad-Tree Plus Binary-Tree (QTBT) CTU representation. A QTBT coding tool may provide increased flexibility. A QTBT representation may include a coding tree, where coding units may be split in a quad-tree and/or in a binary-tree fashion. FIG. 8 shows an example of QTBT coding tree representation of a Coding Tree Unit.

The splitting of a coding unit may be decided on the encoder side, for example, based on (e.g., using) a rate distortion optimization procedure, which may include determining the QTBT representation of the CTU with a minimal rate distortion cost.

A CU may be a square or rectangular shape in a QTBT representation. The size of coding unit may (e.g., always) be a power of two (2), such as between four (4) to 128.

A CTU representation may have one or more (e.g., all) of the following characteristics: a variety of rectangular shapes for a coding unit; QTBT decomposition of a CTU may be multiple (e.g., two) stages; Luma and Chroma block partitioning structure may be separated and/or decided independently in intra slices; a CU may not be partitioned into predictions units or transform units; an additional CU split mode may be implemented.

QTBT decomposition of a CTU may be performed in one or multiple (e.g., two) stages. For example, a CTU may (e.g., first) be split in a quad-tree fashion and a (e.g., each) quad-tree leaf may be further divided in a binary fashion, as shown by example in FIG. 8. As shown in FIG. 8, solid lines may represent the quad-tree decomposition phase and dashed lines may represent the binary decomposition that is spatially embedded in the quad-tree leaves.

The Luma and Chroma block partitioning structure may be separated and/or decided independently in intra slices.

A CU may not be partitioned into predictions units or transform units. A (e.g., each) Coding Unit may be (e.g., systematically) made of a single prediction unit (e.g., previously 2Nx2N prediction unit partition type) and/or a single transform unit (e.g., no division into a transform tree).

A CU may not be partitioned into PUs or TUs for most coding units for most CU coding modes in one or more types of video coding. A (e.g., each) Coding Unit may be (e.g., systematically) made of a single prediction unit (e.g., 2Nx2N prediction unit partition type) and/or a single transform unit (e.g., no division into a transform tree). There may be exceptions. For example, one or more of the following PU or TU partitioning may apply for coding units in one or more (e.g., four (4)) coding modes. A CU (e.g., larger than 64 in width or height) may be tiled into a TU of size equal to the maximum supported transform size. The maximum transform size may be equal to 64, for example. An intra CU coded in intra sub-partition (ISP) mode may be split into two (2) or four (4) transform units, for example, depending on the type of ISP mode used and/or the shape of the CU. An inter CU coded in sub-block transform (SBT) mode may be split into two (2) transform units, where one of the resulting TUs may have residual data equal to zero. An inter CU coded in Triangle Prediction Merge (TPM) mode may be made of two (2) triangular prediction units, where each PU may be assigned its own motion data.

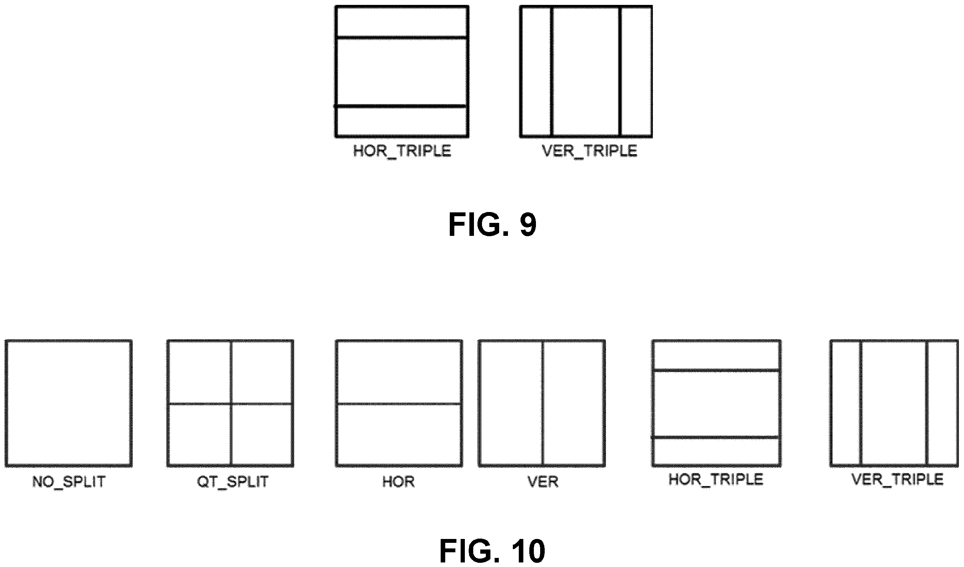

An additional CU split mode may be implemented, which may be referred to as the horizontal of vertical triple tree splitting mode. The CU split mode may include dividing a coding unit (CU) into three (3) sub-coding-units (sub-CUs), which may have respective sizes equal to ¼, ½ and ¼ of the parent CU size, e.g., in the direction of the considered spatial division. An example is illustrated in FIG. 9.

FIG. 9 illustrates an example of Horizontal (e.g., HOR_TRIPLE) and Vertical (e.g., VER_TRIPLE) Triple Tree Coding Unit splitting modes.

An example of a (e.g., complete) set of CU splitting modes present in a codec is shown in FIG. 10.

FIG. 10 illustrates an example of a set of Coding Unit splitting modes supported in video coding.

The dual tree concept may be extended to a block of intra samples in an inter slice, which may remove a limitation that an encoder cannot use all of the intra-coding tools in an inter-slice that are available in an intra-slice. Dual tree may provide (e.g., significant) coding efficiency improvement in the coding of intra slices. Temporal prediction may fail to efficiently predict one or more (e.g., some) parts of the current inter picture, for example, if/when the temporal distance between an inter slice and the reference picture is high. The encoder may (e.g., then) decide to code the region in intra mode. A separate tree representation (e.g., in that case) may (e.g., significantly) improve the compression efficiency for the intra spatial regions.

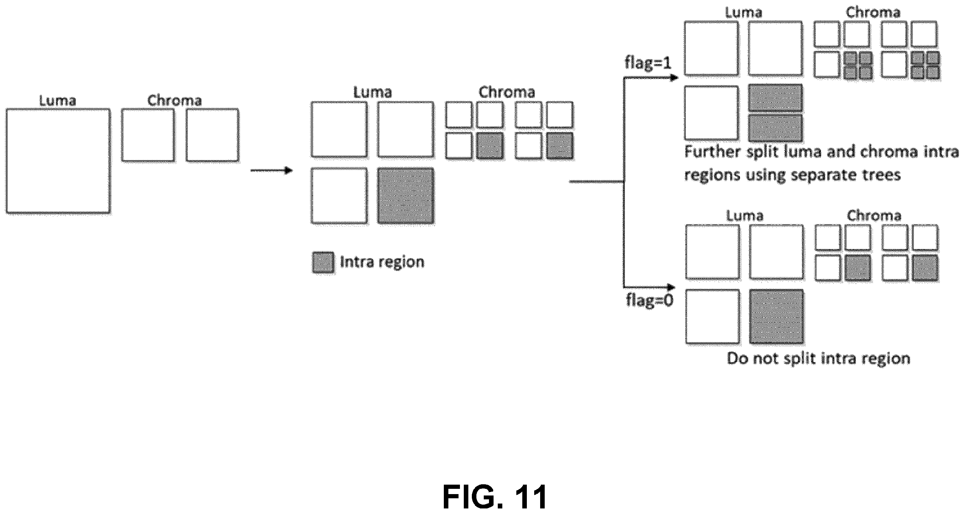

FIG. 11 illustrates an example showing separate tree signaling in inter slices.

Signaling of the presence of a separate tree may be accomplished, for example, with a combination of explicit signaling and inference. A dual tree may be inferred as present, for example, if/when the number of luma samples is large. A dual tree may be inferred as present, for example, if/when the number of luma samples is small. A flag in the bit-stream may (e.g., otherwise) indicate if a dual tree is present or not. The thresholds for what may be a large and small number of luma samples may be signaled in the Sequence Parameter Set (SPS). A flag may (e.g., also) be included in the SPS to indicate whether separate intra trees are enabled for Inter Slices.

The convolutional cross-component model (CCCM) for intra prediction may predict chroma samples from reconstructed luma samples, e.g., in a similar way as Cross-component Luma Mapping (CCLM). The reconstructed luma samples may be down-sampled to match the lower resolution chroma grid, for example, if/when chroma sub-sampling is used.

A single model or multi-model variant of CCCM may be used. Multi-model CCCM mode may be selected, for example, for PUs that have at least 128 reference samples available. The multi-model variant may use multiple (e.g., two) models, e.g., one model may be applied to sample values higher than the average luma reference value and another model may be applied for the rest of the samples (e.g., similar to CCLM).

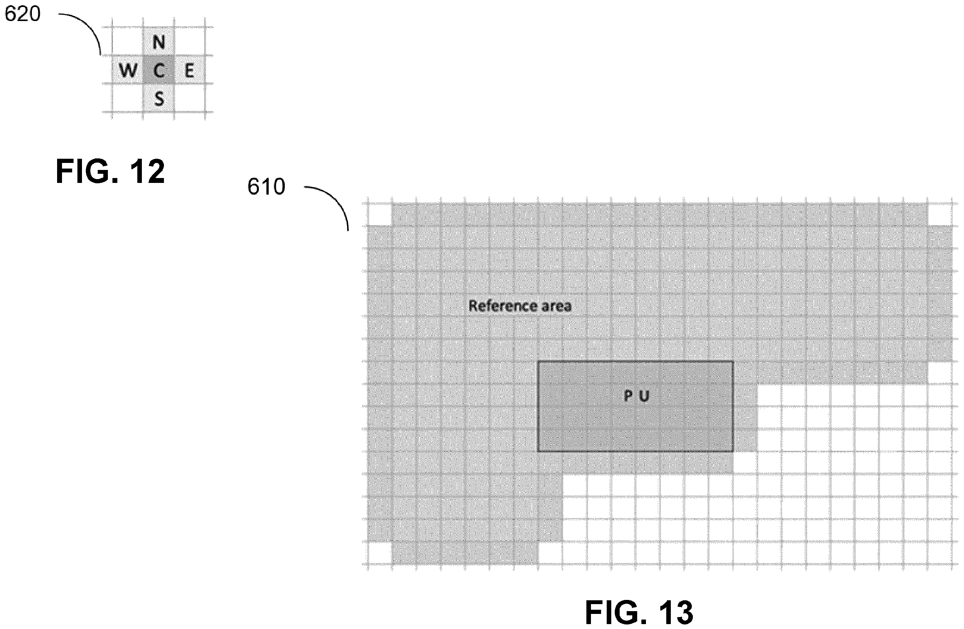

CCCM may use a convolutional filter, which may use multiple (e.g., 7) parameters weighting multiple (e.g., 7) input samples $\{ s_i \}_{i=0,...6}$. Multiple (e.g., 5) coefficients may be applied to luminance pixel values corresponding to a plus sign shape, a (e.g., one) coefficient to a square term (P), and a (e.g., one) coefficient to a bias term (B). The input to the spatial 5-tap component of the filter may include a center (C) luma sample, which may be collocated with the chroma sample to be predicted and an above/north (N), below/south (S), left/west (W), and right/east (E) neighbors, for example, as illustrated in FIG. 12 (620).

FIG. 12 illustrates an example of a spatial part of the convolutional filter (400).

A term P may be represented, for example, as a power of two of the center luma sample C and scaled to the sample value range of the content, for example, in accordance with Eq. (1):

$$P = ( C^*C + midVal ) >> bitDepth \qquad (1)$$

where midVal may be a rounding term. Given 10-bit content, P may be calculated as follows:

$$P = ( C{*}C + 512 ) >> 10$$

A bias term B may be used to represent a scalar offset between the input and output (e.g., similar to the offset used in CCLM). In examples, Midval may be a bias term B representing a scalar offset between the input and output (e.g., similar to the offset term in CCLM). Bias term B may be set to a middle chroma value (e.g., 512 for 10-bit content).

Output of the filter may be calculated as a convolution between the filter coefficients $c_i$ and the input values. The output of the filter may be clipped to the range of valid chroma samples, for example, in accordance with Eq. (2):

$$predChromaVal = c_0C + c_1N + c_2S + c_3E + c4W + c_5P + c_6B \tag{2}$$

The filter coefficients $c_i$ may be calculated, for example, by minimizing the mean squared error (MSE) between predicted and reconstructed chroma samples in the reference area (610) shown in FIG. 13. FIG. 13 (610) illustrates the reference area, which may include, for example, six (6) lines/columns of chroma samples above and left of the PU. The reference area may extend, for example, one PU width to the right and one PU height below the PU boundaries. The area may be adjusted to include (e.g., only) available samples. The extensions to the area shown as a shaded perimeter may be used to support the "side samples" of the plus shaped spatial filter (620). The extensions may be padded, for example, if/when in unavailable areas.

FIG. 13 illustrates an example of a reference area (e.g., with padding, for example, on the border of the reference area 610) that may be used to derive the filter coefficients (700).

The MSE minimization may be performed, for example, by calculating an autocorrelation matrix for the luma input and a cross-correlation vector between the luma input and chroma output, e.g., in accordance with the following:

$$\text{denote } s = \begin{pmatrix} C \\ N \\ S \\ E \\ W \\ P \\ B \end{pmatrix} \text{ where } s_i = \begin{cases} i = 0: C \\ i = 1: N \\ i = 2: S \\ i = 3: E \\ i = 4: W \\ i = 5: P \\ i = 6: B \end{cases}$$

The coefficients $\{c_i\}$ may be derived, for example, by inverting the autocorrelation matrix. For example, the autocorrelation matrix may be $LDL^T$ decomposed. The final filter coefficients may be calculated using back-substitution. The process may (e.g., roughly) follow the calculation of the ALF filter coefficients. However, $LDL^T$ decomposition (e.g., also known as alternative Cholesky decomposition) may be chosen instead of Cholesky decomposition, for example, to avoid using square root operations. In some examples, a Gaussian elimination technique may be used to invert the matrix. In some examples, the calculation may use integer 64-bit arithmetic.

A Gradient Linear Model (GLM) may be used, for example, for a YUV 4:2:0 color format. GLM may be used to predict the chroma samples from luma sample gradients. Multiple (e.g., two) modes may be supported, e.g., a two-parameter GLM mode and a three-parameter GLM mode.

Compared with the CCLM, instead of down-sampled luma values, the two-parameter GLM may utilize luma sample gradients to derive the linear model. In examples where the two-parameter GLM is applied, the input to the CCLM process, e.g., the down-sampled luma samples $L$, may be replaced by luma sample gradients G. The other parts of the CCLM (e.g., parameter derivation, prediction sample linear transform) may remain unchanged, for example, in accordance with Eq. (3)

$$C = \alpha \cdot G + \beta \tag{3}$$

In the three-parameter GLM, a chroma sample may be predicted based on both the luma sample gradients and down-sampled luma values with different parameters. The model parameters of the three-parameter GLM may be derived, for example, from six (6) rows and columns of adjacent samples by the LDL decomposition based MSE minimization method, e.g., as used in the CCCM, for example, in accordance with Eq. (4):

$$C = \alpha_0 \cdot G + \alpha_1 \cdot L + \alpha_2 \cdot \beta \tag{4}$$

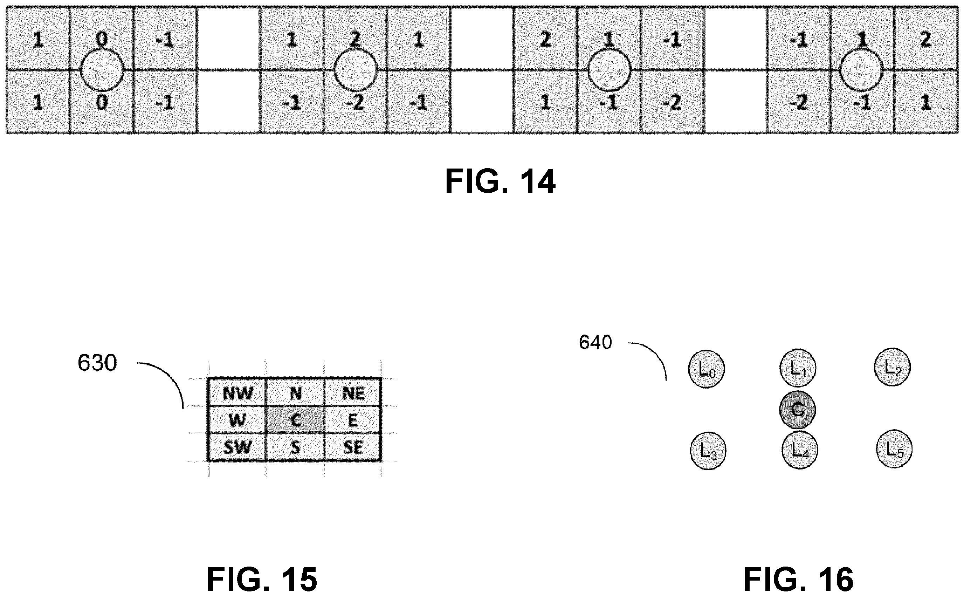

A (e.g., one) flag may be signaled (e.g., if/when the CCLM mode is enabled to the current CU) to indicate whether GLM is enabled for (e.g., both) Cb and/or Cr components. A (e.g., another) flag may be signaled (e.g., if GLM is enabled) to indicate which GLM mode (e.g., of the two GLM modes) is selected. A (e.g., one) syntax element may be signaled to select a gradient filter (e.g., one of four (4) gradient filters) for the gradient calculation. In some examples, e.g., as shown in FIG. 14, four gradient filters may be enabled for the GLM.

FIG. 14 illustrates an example of Four Sobel based gradient patterns for GLM.

A gradient and location based convolutional cross-component model (GL-CCCM) may be a variant of CCCM where the convolution applies on gradient and location information, e.g., instead of the four (4) spatial neighbor samples in the CCCM filter (630) shown in FIG. 15. The GL-CCCM filter for the prediction may be determined, for example, in accordance with Eq. (5):

$$predChromaVal = c0C + c1Gy + c2Gx + c3Y + c4X + c5P + c6B \qquad (5)$$

Where Gy and Gx may be the luma vertical and horizontal gradients, respectively. Gy and Gx may be calculated, for example, in accordance with Eqs. (6) and (7):

$$Gy = (2N + NW + NE) - (2S + SW + SE) \qquad (6)$$

$$Gx = (2W + NW + SW) - (2E + NE + SE) \qquad (7)$$

The Y and X parameters may be the vertical and horizontal coordinates of the center luma sample location. The remaining parameters in Eqs. (6) and (7) may be the same as for CCCM. The reference area for the parameter calculation may be the same as for CCCM.

FIG. 15 illustrates an example of the spatial part of the GL-CCCM convolutional filter (400).

In some examples, the reconstructed luma samples may not be down-sampled to match the lower resolution chroma grid. The co-located reconstructed (e.g., six (6)) luma samples may be used (e.g., directly), for example, as depicted in FIG. 16. The (e.g., four (4)) terms may be built from $L_0$, $L_1$, $L_2$ and $L_4$ plus the bias B. The number of parameters may be 10.

FIG. 16 illustrates an example of the spatial part of the non-down sampled CCCM luma terms that may be used for convolutional filter (440).

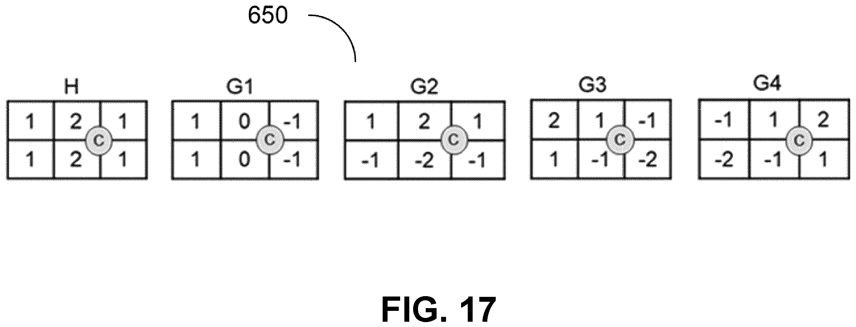

In some examples (e.g., as shown by FIG. 17), multiple (e.g., four (4)) down-sampling filters may be used to derive the input samples to be weighted with the coefficients. The down-sampling filter model may be signaled per CU. The prediction of the chroma samples for Model 1-4 may be derived, for example, in accordance with Eqs. (8)-(11):

$$Model\ 1 \qquad (8)$$

$$predChroma = c0 * H(C) + c1 * G1(C) + c2 * G2(C) + c3 * G3(C) + c4 * G4(C) + c5 * P + c6 * B$$

$$Model\ 2 \qquad (9)$$

$$predChroma = c0 * H(C) + c1 * H(W) + c2 * H(E) + c3 * G1(C) + c4 * G1(W) + c5 * G1(E) + c6 * B$$

$$Model\ 3 \qquad (10)$$

$$predChroma = c0 * H(C) + c1 * H(N) + c2 * H(S) + c3 * G2(C) + c4 * G2(N) + c5 * G2(S) + c6 * B$$

$$Model\ 4 \qquad (11)$$

$$predChroma = c0 * H(C) + c1 * H(NE) + c2 * H(SW) + c3 * G4(C) + c4 * G4(NE) + c5 * G4(SW) + c6 * B$$

where H(·), G1(·), G2(·), G3(·), G4(·) may be down-sampling filters applied on luma samples, e.g., as indicated in FIG. 17 (650).

FIG. 17 illustrates an example of down-sampling filters.

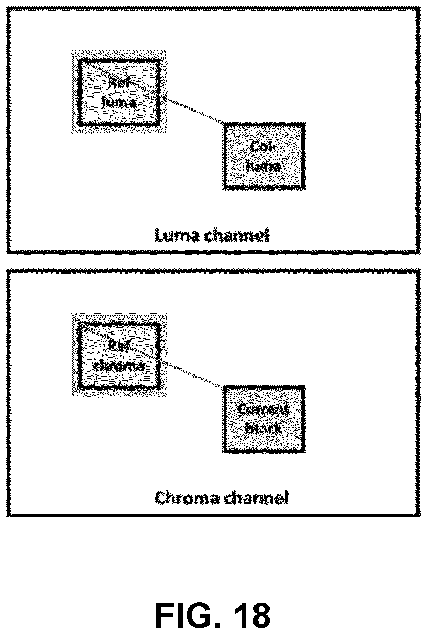

Block-vector guided CCCM (BVG-CCCM) may be used, for example, if/when the co-located luma prediction is coded with IBC or IntraTMP in Intra slices. In BVG-CCCM mode, the block vectors of the co-located luma blocks, e.g., coded in IBC or intraTMP modes, may be used to determine the reference area for calculating the CCCM parameters. The prediction may be performed, for example, using the calculated model parameters and co-located luma samples. FIG. 18 illustrates an example of the reference area in BVG-CCCM.

In some examples, the BVG-CCCM mode may use an 11-tap filter for cross-component prediction, which may be derived, for example, in accordance with Eq. (12):

$$predChromaVal = c_0C + c_1N + c_2S + c_3E + c_4W + c_5P(C) + c_6P(N) + c_7P(S) + c_8P(W) + c_9P(E) + c_{10}B$$

$$(12)$$

The input to the spatial 5-tap component of the filter may include a center (C) luma sample, which may be collocated with the chroma sample to be predicted, and the above/north (N), below/south (S), left/west (W) and right/east (E) neighbors, for example, as illustrated in FIG. 5. The nonlinear term P may be represented as a power of two of the corresponding luma sample. The term B may be a bias term.

FIG. 18 illustrates an example of a reference area for BVG-CCCM.

Similar to Direct Block Vector (DBV) mode, five locations in the collocated luma block area may be scanned. The associated block vectors may (e.g., then) be used for determining the reference area for parameter calculation in BVG-CCCM.

Non-local cross-component prediction and cross-component merge mode may be implemented. For intra blocks, a CU-level choice of the luma to chroma cross-component prediction mode may be enabled. One or more (e.g., some) syntax elements (e.g., LMCMode flag, cclmFlag, mmlmFlag, cccmFlag, cccmNoSubFlag, glCccmFlag, glmFla) may be enabled.

Derivation of the cross-component prediction (CCP) used for a given block may be derived from an already coded block in same picture.

A CCP merge candidate list may be constructed from the spatial adjacent, spatial non-adjacent, and/or history-based candidates. Default models may fill remaining empty positions in the merge list (e.g., if any) after including the spatial adjacent, spatial non-adjacent, and/or history-based candidates. A pruning operation may be applied to remove redundant CCP models in the list. The CCP models in the constructed list may be reordered, e.g., depending on the SAD costs, which may be obtained using the neighboring template of the current block.

The positions and inclusion order of the spatial adjacent and non-adjacent candidates may be the same as those defined for regular inter merge prediction candidates.

A history-based table of history-based candidates may be maintained to include the recently used CCP models. The table may be reset, for example, at the beginning of a (e.g., each) CTU row. The CCP models in the history-based table may be added into the list, for example, if the current list is not full after including spatial adjacent and non-adjacent candidates.

Default candidates may be added to a list. CCLM candidates with default scaling parameters may be considered, for example, (e.g., only) if/when the list is not full after including other candidates, e.g., spatial adjacent, spatial non-adjacent, and/or history-based candidates. Default scaling parameters may be used, for example, if the current list has no candidates with the single model CCLM mode. The default scaling parameters may be {0, 1/8, -1/8, 2/8, -2/8, 3/8, -3/8, 4/8, -4/8, 5/8, -5/8, 6/8}. Otherwise (e.g., if the current list has one or more candidates with the single model CCLM mode), the default scaling parameters may be {0, the scaling parameter of the first CCLM candidate + {1/8, -1/8, 2/8, -2/8, 3/8, -3/8, 4/8, -4/8, 5/8, -5/8, 6/8}}. The offset parameter may be derived, for example, according to the default scaling parameter, average neighboring reconstructed luma sample value, and/or average neighboring reconstructed Cb/Cr sample value.

A flag may be signaled to indicate whether the CCP merge mode is applied or not. If CCP merge mode is applied, an index may be signaled to indicate which candidate model may be used by the current block. CCP merge mode may not be allowed for the current chroma coding block, for example, if/when the current CU is coded by intra subpartitions (ISP) with single tree, or if the current chroma coding block size is less than or equal to 16.

Video coding may be improved, for example, to improve compression efficiency, e.g., compared to existing video compression. Video compression may be improved, for example, by an adaptive dual (e.g., or separate) coding tree. There may be technical issues that arise if/when jointly using the adaptive single/dual-tree selection for intra regions in inter slices, and cross-component prediction tools., which may impact compression efficiency.

Adaptive dual-tree coding may be adapted, for example, to synergize with other coding tools and/or for the selective usage of dual-tree at coding tree node level. Other coding tools may include, for example, cross-component prediction tools, such as CCCM, CCRM, and/or Block Vector Guided CCCM, which may be adapted to the usage of adaptive dual-tree in inter slices, e.g., with respect to the reference luma samples computation and/or co-located luma samples computation in case of dual-tree.

There may be interaction between cross-component convolutional filtering tools and adaptive dual-tree coding in inter slices.

Adaptations may be provided for the interaction between cross-component prediction tools and the adaptive dual-tree coding mode.

In a Cross-Component prediction tool (e.g., as described herein), a reference area of reconstructed luma reference samples (e.g., as depicted in FIG. 13) may be used for the derivation of a cross-component convolution filter coefficient.

The reference area may be padded (e.g., shaded perimeter samples shown in FIG. 13), for example, by repetitive extension of the border or by considering reconstructed luma samples at the border of the reference area, e.g., if/when available.

The set of luma reference samples on which the calculated CCCM filtering may be applied may (e.g., also) be extended, for example, to the right and bottom borders of the luma area co-located with the current chroma PU. The extension may (e.g., also) employ repetitive padding or usage of reconstructed luma samples at considered spatial position, e.g., if/when available.

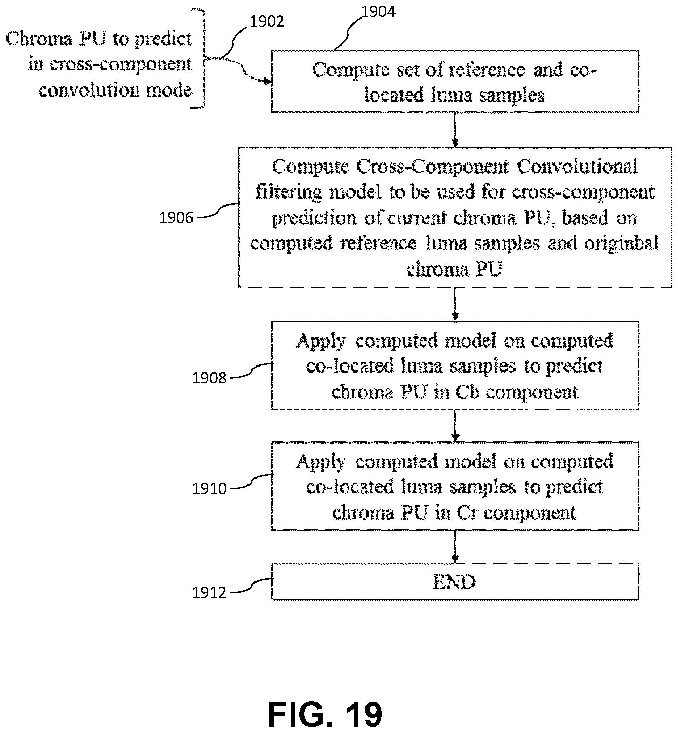

FIG. 19 depicts an example of a process (e.g., an overall process) that may be used to predict a chroma PU, e.g., two (2) chroma blocks (e.g., Cb and Cr components) in cross-component convolutional model filtering (CCCM) mode. The input 1902 to the process may be a chroma PU to predict.

As shown in FIG. 19, at 1904, the set of reference luma samples may be computed from a reconstructed luma component, which may serve for CCCM filtering parameters (e.g., as described herein). The set of co-located luma samples may (e.g., also) be computed. The derived CCM filtering model may be applied to the set of co-located luma samples to predict the chroma blocks.

At 1906, multiple (e.g., two) CCCM models may be applied to the co-located luma samples, for example, to predict Cb and Cr chroma blocks. The (e.g., two) models may be computed between the set of reference luma samples generated at 1904 and their corresponding chroma samples reconstructed and located on the top and on the left of current chroma PU.

At 1908 and 1910, the (e.g., two) models may be applied on the co-located luma samples of the current chroma PU computed at 1904, for example, to provide the predicted chroma blocks.

FIG. 19 illustrates an example of a process (e.g., an overall process) to predict a chroma PU through cross-component convolutional filtering.

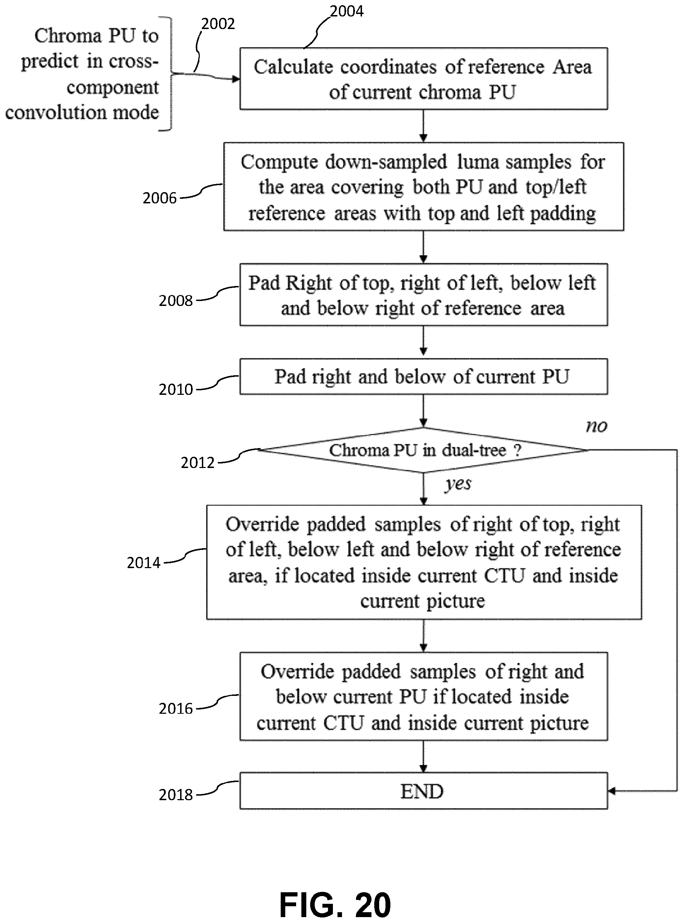

FIG. 20 illustrates an example of computing a set of reference and collocated luma samples, e.g., as shown at 1904 in FIG. 19. The input 2002 to the process of FIG. 20 may be the current chroma PU to predict with a CCCM-based process (e.g., CCCM, GLM, or GL-CCCM, as described herein).

As shown in FIG. 20, at 2004, the coordinates of the reference area of current chroma PU (e.g., as shown in FIG. 13) may be computed.

At 2006, the set of reference luma samples co-located with the reference area may be computed. The reconstructed luma samples co-located with a (e.g., each) spatial position in the reference area may be retrieved. A down-sampling operation may be used to compute a (e.g., each) luma value in the reference area. Each luma value of luma positions co-located with each chroma position in the current chroma PU may be computed. A down-sampling operation may be performed, for example, in case of a 420 or 422 chroma format.

At 2008, a padding of the reference area and the set of derived co-located luma samples of current chroma PU may be performed, which may imply a repletion of border luma values of the reference area to the below, top, right and left along each border of the reference area shown in FIG. 13.

At 2010, the set of co-located luma values of the chroma PU may be padded, for example, with a repetitive padding toward the right and bottom of the chroma PU.

At 2012, a test may be performed to check/determine if current chroma PU is in dual tree or not. If current chroma PU is not in dual tree, the process of FIG. 20 may end at 2018.

At 2014, if current chroma PU is in dual tree, an improved padding may be performed, for example, by overriding the padded values previously obtained by actual reconstructed luma value, e.g., where available. For example, for each spatial position on the right and below the reference area, a check may be performed to determine if the position is within the picture boundaries and/or is (e.g., also) within the same CTU as the current chroma PU. If so, since the current chroma block is in dual tree, the (e.g., full) CTU luma block may be available in its reconstructed form at both the encoder and decoder sides. The right and below padded samples of current reference area may be replaced by their co-located luma value computed from reconstructed luma samples (e.g., reconstructed luma samples taken as is if CCCM with no sub-sampling is used), or down-sampled to the chroma resolution otherwise. Accordingly, padded values having an improved quality may be taken into account for CCCM filter derivation.

At 2016, the padded values of co-located luma samples of the current chroma PU may be replaced by luma values issued from actually reconstructed luma samples, for example, if located inside same CTU as the current chroma PU.

The padded samples overriding operations at 2014 and 2016 may work properly, for example, because a chroma PU is in dual tree mode implies that the (e.g., full) CTU including the chroma PU may also be in dual tree mode, which may mean that (e.g., all) luma samples in the considered CTU are available in their reconstructed version at the time the CCCM filter is being derived and applied by the encoder and the decoder.

In some examples, the (e.g., full) CTU may not be in dual tree mode when the current chroma PU is in dual tree mode, such as if the dual tree mode is being used in a local way, e.g., in a spatial area smaller than the full CTU.

Therefore, the computation of luma reference samples and of luma co-located samples may not be achieved, e.g., as is in the case of the adaptive local dual-tree.

As described herein, the usage of CCM may be combined with a local adaptive dual-tree representation tool.

FIG. 20 illustrates an example of the computation of reference and co-located luma samples of a PU for cross-component convolution filter derivation and application.

In some examples, the usage of reconstructed luma samples may be removed, for example, if/when computing the set of reference and co-located luma sample values that may be used, respectively, for CCCM model derivation and CCCM model application.

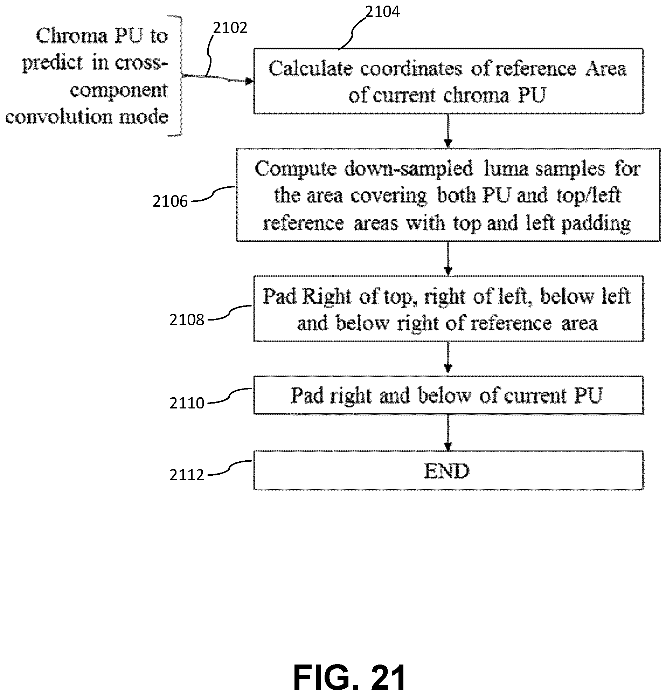

An example is shown in FIG. 21. In some examples (e.g., as shown in FIG. 21), the same operations shown in FIG. 20 may be implemented in operations 2104, 2106, 2108 and 2110 without the operations at 2012, 2014, and 2016 involving overriding padded reference and co-located luma values with reconstructed luma values (e.g., 2004, 2006, 2008, 2010 of FIG. 20 may be performed in 2104, 2106, 2108, and 2110 of FIG. 21, respectively, and the example in FIG. 21 may end at 2112).

In some examples, the example shown in FIG. 21 may be a simpler process while the luma values used for CCCM filter derivation and application use (e.g., rely on) available reconstructed luma values, e.g., if/when local dual-tree may be used to code current chroma PU and/or if/when the current chroma PU is in single tree mode.

Some examples that rely on padded luma values (e.g., rather than reconstructed luma values) for the right and bottom part of the reference and co-located regions may be changed. Compression efficiency may improve.

FIG. 21 illustrates an example of providing interaction between dual-tree and the computation of reference and co-located luma samples used for CCCM filter derivation and application.

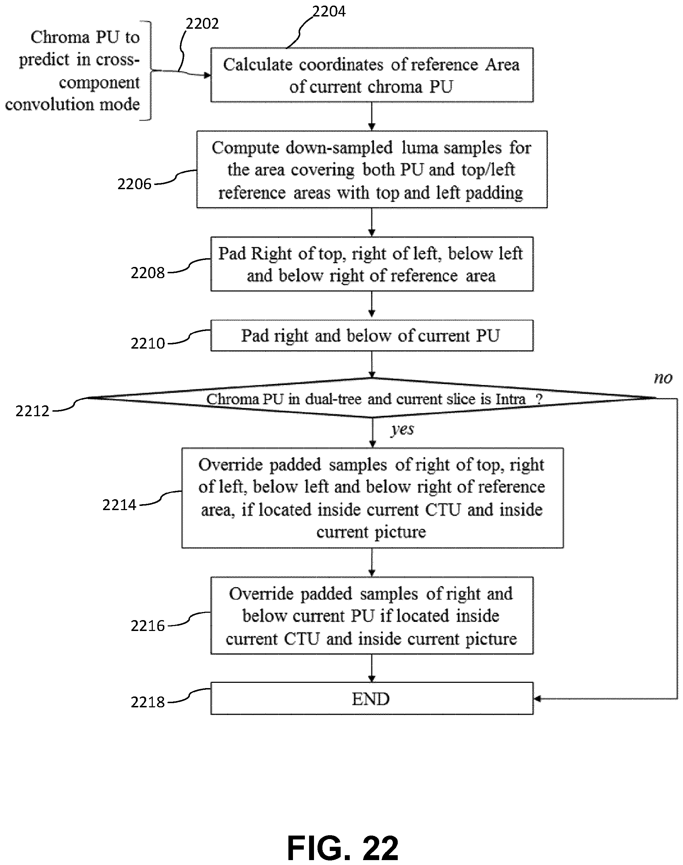

FIG. 22 shows an example of using reconstructed luma values or down-sampled reconstructed luma values as the padded value of a reference area and of a co-located luma samples set, for example, according to whether the chroma block is in dual-tree and/or according to current slice type. The input 2202 to the process of FIG. 22 may be the current chroma PU to predict with a CCCM-based process (e.g., CCCM, GLM, or GL-CCCM, as described herein). As shown in FIG. 22, at 2204, the coordinates of the reference area of current chroma PU (e.g., as shown in FIG. 13) may be computed. At 2206, the set of reference luma samples co-located with the reference area may be computed. The reconstructed luma samples co-located with a (e.g., each) spatial position in the reference area may be retrieved. A down-sampling operation may be used to compute a (e.g., each) luma value in the reference area. Each luma value of luma positions co-located with each chroma position in the current chroma PU may be computed. A down-sampling operation may be performed, for example, in case of a 420 or 422 chroma format. At 2208 and 2210, the padding (e.g., repetitive padding) of the reference area and of the down-sampled luma PU may be performed. At 2212 (e.g., the check on dual tree mode at 2012 may be replaced, for example, by the operation at 2212), the process may check if the current PU is in dual-tree mode (e.g., which may be local dual tree) and if the current slice, which includes the current PU, is an intra slice. If not, the process ends at 2218. If so, at 2214 and 2216, padded luma values may be replaced by reconstructed values, e.g., similar to 2014 and 2016.

The process shown in FIG. 22 may be used, for example, if/when the local dual-tree is used (e.g., only) in inter slices. In intra slices, the separate (dual) tree mode may be used for a (e.g., every) CTU, e.g., such that a (e.g., every) chroma PU in the slice may be coded in dual tree mode. Thus, for a (e.g., every) chroma PU in an intra slice, (e.g., all) luma samples in the same CTU as the chroma PU may be available in its reconstructed state at the time chroma PU is being cross-component predicted.

FIG. 22 illustrates an example of slice type based interaction between dual-tree and the computation of reference and co-located luma samples used for CCCM filter derivation and application.

The last property may not apply for a Virtual Pipeline Decoding Unit (VPDU) constraint. A VPDU may be a square area of a picture, which may be smaller than a CTU. The size of a VPDU may be, for example, equal to 64x64 luma samples or 128x128 luma samples. A VPDU constraint may ensure that during the decoding process, (e.g., all) luma and chroma samples in a given VPDU are (e.g., fully) reconstructed (e.g., parsing, prediction data derivation, prediction, residual decoding and addition of decoded residual to predicted luma and chroma blocks) before the decoder starts processing luma or chroma samples of a next VPDU in the same picture. The decoding process may not (e.g., need to) come back to perform a (e.g., any additional) decoding operation for reconstructed luma and chroma samples of a VPDU.

As a consequence, when VPDU size is smaller than CTU size, (e.g., all) reconstructed luma samples may not be available at the time a chroma block is being processed. The luma values at the right and/or below the considered chroma PU may not be available in their reconstructed version, for example, if a chroma block is located at the right and/or bottom border of a VPDU, even if inside the CTU.

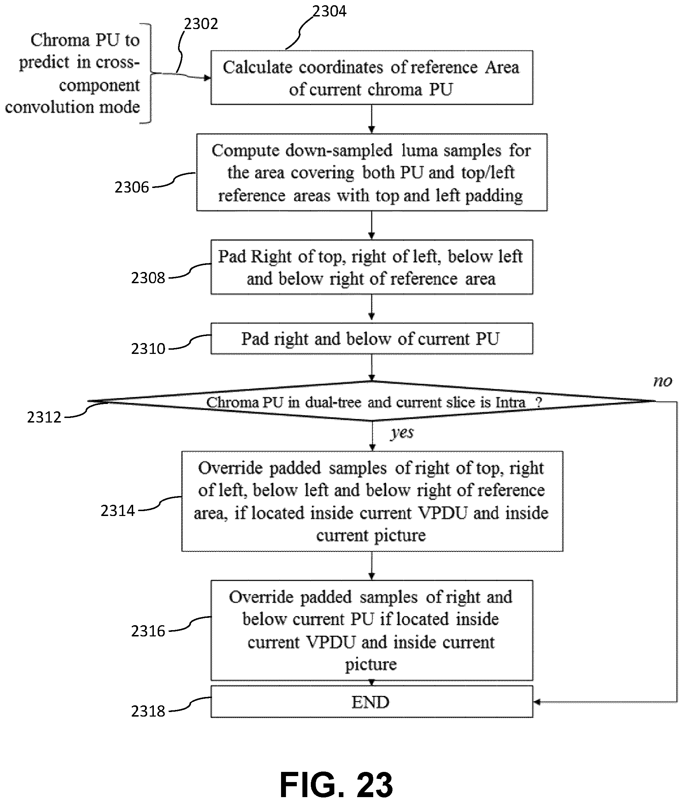

In some examples, if the VPDU constraint applies, the operations at 2214 and 2216 shown in FIG. 22 may be modified, for example, as shown by operations 2314 and 2316 in the example process depicted in FIG. 23 (e.g., the operations at 2202, 2204, 2206, 2208, 2210, and 2212 of FIG. 22 may be performed at 2302, 2304, 2306, 2308, 2310, and 2312, respectively). As shown by comparing operations at 2214 and 2216 in FIG. 22 to operations at 2314 and 2316 in FIG. 23, a test to check if samples used to override padded value lies within the current CTU and inside the picture boundaries at 2214 and 2216 may be replaced at 2314 and 2316 by a test to check if samples used to override the padded values around reference area and re-sampled co-located luma PU lie within the same VPDU as current chroma PU, and inside the picture boundaries. The example of FIG. 23 may end at 2318.

FIG. 23 illustrates an example of applying a Virtual Pipeline Decoding Unit (VPDU) constraint to override padding samples (e.g., at the video encoder and decoder).

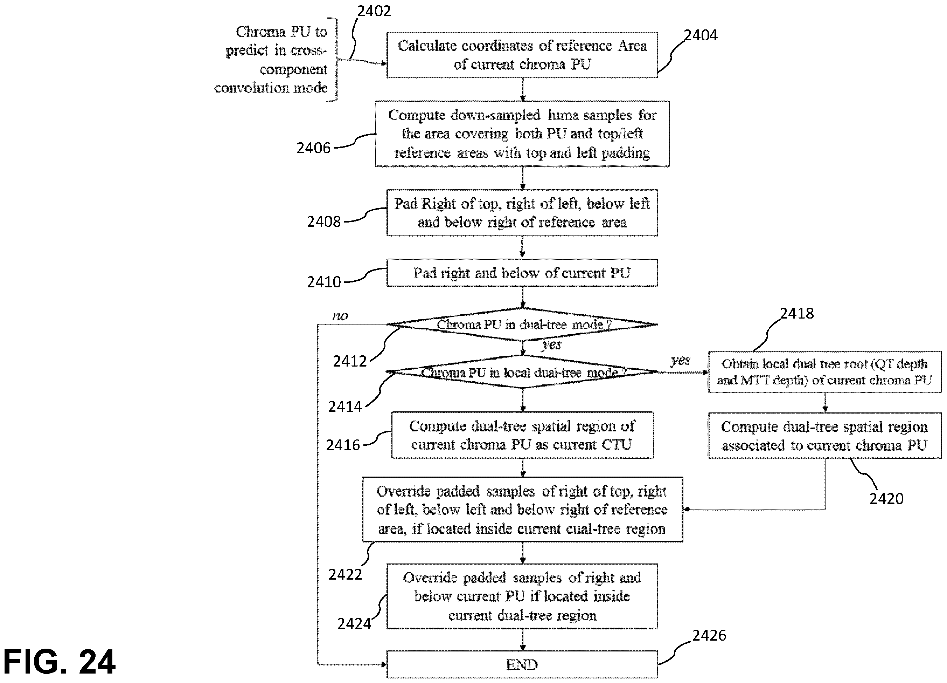

FIG. 24 shows an example (e.g., partially similar to other examples; operations at 2402-2410 may be similar to operations at 2004-2010, 2104-2110, 2204-2210, 2304-2310). The difference in the process shown in FIG. 24 lies in the second phase, which may replace padded luma values around a reference area of luma samples and a co-located area of luma samples, for example, by luma values equal to or derived from luma reconstructed values (e.g., according to whether CCCM is performed without or with subsampling).

At 2412, a test may determine whether a current chroma PU is in dual-tree mode. If not, the process may end at 2426. Otherwise (e.g., if the current chroma PU is in dual-tree mode), a second test may be performed at 2414 to check if the current PU is in local dual-tree mode. Local dual-tree mode may indicate that the chosen coding tree of the current CPU may be shared by luma and chroma components down to a certain coding tree node, and then may be separated or dual. The same signaling at coding tree node level may be employed to indicate switching between single and dual tree, e.g., as described herein.

At 2416 (e.g., if the chroma PU is not in local dual-tree mode), the enclosing spatial region of the current chroma PU where dual-tree is used may be computed. The spatial region may be equal to the full CTU including the chroma PU, for example, if the chroma PU is not in local dual tree mode.

At 2418 (e.g., if the chroma PU is in local dual-tree mode), a (e.g., each) CU in local dual tree mode may have some associated local dual tree information, which may identify the coding tree node that is the root of the considered local dual tree. AT 2418, the local dual tree root may be identified, for example, to the quad-tree depth and multi-type tree (MTT) depth values associated with the local dual tree root. A (e.g., each) CU, e.g., in single or dual tree or local dual tree, may be associated with a series of split modes that lead to the current chroma block (e.g., CU containing considered chroma PU) by recursively splitting the enclosing CTU. At 2420, the spatial region (e.g., spatial dual-tree region) in the current CTU that is associated with the coding tree node that is the root of the current considered local dual coding tree containing current chroma PU may be computed.

At 2422 and 2424, decision criteria may be applied to determine whether to replace padded luma values by reconstructed-based luma.

At 2422, padded reference area luma samples may be replaced by a co-located luma value derived from reconstructed luma samples, for example, if the reconstructed luma samples and the current chroma sample are spatially located within the same spatial dual tree region.

At 2424, padded luma samples around the co-located luma block of current chroma PU may be replaced by a co-located luma value derived from reconstructed luma samples, for example, if the reconstructed luma samples and the current chroma sample are spatially located within the same spatial dual tree region.

FIG. 24 illustrates an example of local dual-tree region based computation of reference and co-located luma samples that may be used for CCCM filter derivation and application.

Examples described herein also apply (e.g., as is) to the case of CCCM prediction modes that are GLM and GL-CCCM (e.g., as described herein).

Examples described herein also apply to examples (e.g., implementations) where a current chroma PU may be coded in Cross-Component Prediction (CCP) merge mode.

A convolutional filtering model used in CCP merge mode to cross-component predict a chroma PU may be derived from a previous code block in the same picture or CTU. A reference area to compute the CCCM filtering model at decoder and encoder sides need not be computed.

In some examples, the luma block co-located with current PU (e.g., co-located luma block), on which the derived CCCM model may be applied to predict Cb and Cr blocks, may (e.g., need to) be computed. One or more examples, as described herein (e.g., where local dual-tree may be used in the coding of the chroma), may be used to compute the extended luma samples around the spatial borders of the co-located luma block, and on which the convolutional filter shown in FIG. 12 is to be applied.

Examples described herein also apply in the context of the block-vector guided CCCM mode (BVGCCCM) (e.g., as described herein).

For example, the same padding around the reference area and the co-located luma block may be implemented in BVGCCCM as in the regular CCCM modes, e.g., in particular on the right and below the reference and co-located areas.

A difference may lie in the specification of the reference area. The reference chroma and luma areas in BVGCCCM mode, which may be used to derive the convolutional filtering model synchronously at encoder and decoder sides, may not be L-shape areas around current chroma PU.

The reference chroma and luma areas in BVGCCCM mode may be rectangular regions, which may be identified by the Block-Vector issued from the co-located luma PU. The block vector (BV) of a co-located luma PU may be resampled to the resolution of the chroma component, e.g., as shown in FIG. 18, for example, if the co-located luma PU of current chroma PU is in IBC (Intra-Block-Copy) or IntraTMP (Intra template matching prediction) modes.

The already reconstructed luma and chroma block pointed to by re-sampled BV may (e.g., then) be used as the reference luma and chroma region, for example, based on which CCCM filtering model is derived.

Examples described herein related to spatially extending the reference areas may be applicable to BVGCCCM. For example, co-located luma block extension examples described herein may be applied for BVGCCCM, if a current chroma PU is in BVGCCCM mode.

A decoder may skip replacing a padding luma sample with a previously reconstructed luma sample in a CTU. In some examples, the decoder may determine whether to replace a padding luma sample with a previously reconstructed luma sample in a CTU based on a determination of whether the dual tree mode is enabled for the CTU and a determination of whether that the slice is the intra-slice. In some examples, the decoder may determine whether to replace a padding luma sample with a previously reconstructed luma sample in a CTU (e.g., a region in the CTU) based on a determination of whether the dual tree mode is enabled for the CTU and based on a determination of whether a local dual tree mode is enabled for the chroma PU in the CTU. Decoding tools and techniques (e.g., as illustrated in FIG. 3) including, for example, one or more of entropy decoding, inverse quantization, inverse transformation, and differential decoding may be used to enable one or more examples as described herein in a decoder. For example, these decoding tools and techniques may be used to enable one or more of: determining that a CCCM is enabled for a chroma PU in a CTU; determining whether a dual tree mode is enabled for the CTU; determining a luma PU that is collocated with the chroma PU; determining a set of reference luma samples associated with the chroma PU; adding a plurality of padding luma samples to the set of reference luma samples to generate a modified set of reference luma samples (e.g., the plurality of padding luma samples may be generated based on one or more reference luma samples of the set of reference luma samples; a padding luma sample of the plurality of padding luma samples may not be replaced by a previously reconstructed luma sample in the CTU); generating a CCCM filter coefficient, for example, based on the modified set of reference luma samples; predicting the chroma PU based on the CCCM filter coefficient and the luma PU; decoding the CTU based on the predicted chroma PU; determining that the dual tree mode is enabled for the CTU (e.g., in a slice) comprising the chroma PU; determining whether the slice is an intra-slice; disabling (e.g., based on a determination that the dual tree mode is enabled for the CTU and the determination that the slice is not the intra-slice) a replacement of the padding luma sample of the plurality of padding luma samples with the previously reconstructed luma sample in the CTU (e.g., the chroma PU may be predicted based on the disablement of the replacement of the padding luma sample of the plurality of padding luma samples); for a CTU (e.g., a different or a second CTU) or slice (e.g., a different or second slice), determining that the dual tree mode is enabled for the CTU (e.g., in a slice) comprising a chroma PU; determining a set of reference luma samples in the CTU; adding a plurality of padding luma samples to the set of reference luma samples in the CTU (e.g., the plurality of padding luma samples may be generated based on the one or more reference luma samples of the set of reference luma samples in the CTU); determining whether a slice is an intra-slice; modify the plurality of padding luma samples by replacing a padding luma sample of the plurality of padding luma samples with a previously reconstructed luma sample in the CTU (e.g., based on a determination that the dual tree mode is enabled for the CTU and the determination that the slice is the intra-slice); predicting the chroma PU based on the set of reference luma samples in the CTU and the modified plurality of padding luma samples; determining that the chroma PU and a padding luma sample of the plurality of padding luma samples are located within a VPDU; modifying the plurality of padding luma samples by replacing the padding luma sample of the plurality of padding luma samples with a previously reconstructed luma sample in the VPDU (e.g., based on a determination that the dual tree mode is enabled for the CTU, the determination that the slice is the intra-slice, and the determination that the chroma PU and the padding luma sample of the plurality of padding luma samples are located within the VPDU); determining that the dual tree mode is enabled for a CTU comprising a chroma PU and determining whether a local dual tree mode is enabled for the chroma PU in the CTU (e.g., in the local dual tree mode, the dual tree mode may not enabled for an entirety of the CTU, and/or the dual tree mode may be enabled for a region within the CTU); determining (e.g., based on a determination that the local dual tree mode is enabled for the chroma PU in the CTU) the region for which the dual tree mode is enabled (e.g., the region is within the chroma PU); determining a set of reference luma samples in the CTU; adding a plurality of padding luma samples to the set of reference luma samples in the CTU (e.g., the plurality of padding luma samples is generated based on one or more reference luma samples of the set of reference luma samples in the CTU and/or modify (e.g., based on a determination that the chroma PU in the CTU is in the determined region within the CTU) the plurality of padding luma samples by replacing a padding luma sample of the plurality of padding luma samples with a previously reconstructed luma sample in the region within the CTU; determining a multiple type tree (MTT) partition depth associated with the local dual tree mode and/or determining the region within the CTU based on the MTT partition depth; determining the region for which the dual tree mode is enabled as the CTU based on a determination that the local dual tree mode is not enabled for the chroma PU in the CTU and/or modifying the plurality of padding luma samples, for example, by replacing a padding luma sample of the plurality of padding luma samples with a previously reconstructed luma sample in the CTU; determining the set of reference luma samples associated with the chroma PU based on a block vector associated with the CTU; determining that a cross-component prediction (CCP) merge mode is enabled for a chroma PU in a CTU; determining a luma PU (e.g., comprising a set of luma samples) that is collocated with the chroma PU; determining a set of reference luma samples based on a previously decoded video block in the CTU; generating a CCCM filter coefficient based on the set of reference luma samples; adding a plurality of padding luma samples to the set of luma samples of the luma PU to generate a modified set of luma samples and/or skipping replacing a padding luma sample of the plurality of padding luma samples by a previously reconstructed luma sample in the CTU; predicting the chroma PU in the CTU based on the CCCM filter coefficient and the modified set of luma samples in the CTU; decoding the CTU based on the predicted chroma PU in the CTU; determining a plurality of coordinates associated with a reference area of the chroma PU; determining the set of reference luma samples based on the plurality of coordinates associated with the reference area and by downsampling previously reconstructed luma samples; determining a plurality of locations including right of top, right of left, below left, below right of the reference area; generating the plurality of padding luma samples for the plurality of locations and by duplicating the one or more reference luma samples of the set of reference luma samples; downsampling the set of luma samples by downsampling the luma PU based on a chroma format associated with the CTU; etc.

An encoder may skip replacing a padding luma sample with a previously reconstructed luma sample in a CTU. In some examples, the encoder may determine whether to replace a padding luma sample with a previously reconstructed luma sample in a CTU based on a determination of whether the dual tree mode is enabled for the CTU and a determination of whether that the slice is the intra-slice. In some examples, the encoder may determine whether to replace a padding luma sample with a previously reconstructed luma sample in a CTU (e.g., a region in the CTU) based on a determination of whether the dual tree mode is enabled for the CTU and based on a determination of whether a local dual tree mode is enabled for the chroma PU in the CTU. Encoding tools and techniques (e.g., as illustrated in FIG. 2) including one or more of quantization, entropy coding, inverse quantization, inverse transformation, and differential coding may be used to enable one or more examples as described herein in the encoder. For example, these encoding tools and techniques may be used to enable one or more of: determining that a CCCM is enabled for a chroma PU in a CTU; determining whether a dual tree mode is enabled for the CTU; determining a luma PU that is collocated with the chroma PU; determining a set of reference luma samples associated with the chroma PU; adding a plurality of padding luma samples to the set of reference luma samples to generate a modified set of reference luma samples (e.g., the plurality of padding luma samples may be generated based on one or more reference luma samples of the set of reference luma samples; a padding luma sample of the plurality of padding luma samples may not be replaced by a previously reconstructed luma sample in the CTU); generating a CCCM filter coefficient, for example, based on the modified set of reference luma samples; predicting the chroma PU based on the CCCM filter coefficient and the luma PU; encoding the CTU based on the predicted chroma PU; determining that the dual tree mode is enabled for the CTU (e.g., in a slice) comprising the chroma PU; determining whether the slice is an intra-slice; disabling (e.g., based on a determination that the dual tree mode is enabled for the CTU and the determination that the slice is not the intra-slice) a replacement of the padding luma sample of the plurality of padding luma samples with the previously reconstructed luma sample in the CTU (e.g., the chroma PU may be predicted based on the disablement of the replacement of the padding luma sample of the plurality of padding luma samples); for a CTU (e.g., a different CTU) or slice (e.g., a different slice), determining that the dual tree mode is enabled for the CTU (e.g., in a slice) comprising a chroma PU; determining a set of reference luma samples in the CTU; adding a plurality of padding luma samples to the set of reference luma samples in the CTU (e.g., the plurality of padding luma samples may be generated based on the one or more reference luma samples of the set of reference luma samples in the CTU); determining whether a slice is an intra-slice; modify the plurality of padding luma samples by replacing a padding luma sample of the plurality of padding luma samples with a previously reconstructed luma sample in the CTU (e.g., based on a determination that the dual tree mode is enabled for the CTU and the determination that the slice is the intra-slice); predicting the chroma PU based on the set of reference luma samples in the CTU and the modified plurality of padding luma samples; determining that the chroma PU and a padding luma sample of the plurality of padding luma samples are located within a VPDU; modifying the plurality of padding luma samples by replacing the padding luma sample of the plurality of padding luma samples with a previously reconstructed luma sample in the VPDU (e.g., based on a determination that the dual tree mode is enabled for the CTU, the determination that the slice is the intra-slice, and the determination that the chroma PU and the padding luma sample of the plurality of padding luma samples are located within the VPDU); determining that the dual tree mode is enabled for a CTU comprising a chroma PU and determining whether a local dual tree mode is enabled for the chroma PU in the CTU (e.g., in the local dual tree mode, the dual tree mode may not enabled for an entirety of the CTU, and/or the dual tree mode may be enabled for a region within the CTU); determining (e.g., based on a determination that the local dual tree mode is enabled for the chroma PU in the CTU) the region for which the dual tree mode is enabled (e.g., the region is within the chroma PU); determining a set of reference luma samples in the CTU; adding a plurality of padding luma samples to the set of reference luma samples in the CTU (e.g., the plurality of padding luma samples is generated based on one or more reference luma samples of the set of reference luma samples in the CTU and/or modify (e.g., based on a determination that the chroma PU in the CTU is in the determined region within the CTU) the plurality of padding luma samples by replacing a padding luma sample of the plurality of padding luma samples with a previously reconstructed luma sample in the region within the CTU; determining a multiple type tree (MTT) partition depth associated with the local dual tree mode and/or determining the region within the CTU based on the MTT partition depth; determining the region for which the dual tree mode is enabled as the CTU based on a determination that the local dual tree mode is not enabled for the chroma PU in the CTU and/or modifying the plurality of padding luma samples, for example, by replacing a padding luma sample of the plurality of padding luma samples with a previously reconstructed luma sample in the CTU; determining the set of reference luma samples associated with the chroma PU based on a block vector associated with the CTU; determining that a cross-component prediction (CCP) merge mode is enabled for a chroma PU in a CTU; determining a luma PU (e.g., comprising a set of luma samples) that is collocated with the chroma PU; determining a set of reference luma samples based on a previously encoded video block in the CTU; generating a CCCM filter coefficient based on the set of reference luma samples; adding a plurality of padding luma samples to the set of luma samples of the luma PU to generate a modified set of luma samples and/or skipping replacing a padding luma sample of the plurality of padding luma samples by a previously reconstructed luma sample in the CTU; predicting the chroma PU in the CTU based on the CCCM filter coefficient and the modified set of luma samples in the CTU; encoding the CTU based on the predicted chroma PU in the CTU; determining a plurality of coordinates associated with a reference area of the chroma PU; determining the set of reference luma samples based on the plurality of coordinates associated with the reference area and by downsampling previously reconstructed luma samples; determining a plurality of locations including right of top, right of left, below left, below right of the reference area; generating the plurality of padding luma samples for the plurality of locations and by duplicating the one or more reference luma samples of the set of reference luma samples; downsampling the set of luma samples by downsampling the luma PU based on a chroma format associated with the CTU; etc

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A device for video decoding, comprising:
   a processor configured to:

   determine that a cross-component convolution mode (CCCM) is enabled for a chroma prediction unit (PU) in a coding tree unit (CTU), wherein a dual tree mode is enabled for the CTU;
   determine a luma PU that is collocated with the chroma PU;
   determine a set of reference luma samples associated with the chroma PU;
   add a plurality of padding luma samples to the set of reference luma samples to generate a modified set of reference luma samples, wherein the plurality of padding luma samples is generated based on one or more reference luma samples of the set of reference luma samples, and a padding luma sample of the plurality of padding luma samples is not replaced by a previously reconstructed luma sample in the CTU;
   generate a CCCM filter coefficient based on the modified set of reference luma samples;
   predict the chroma PU based on the CCCM filter coefficient and the luma PU; and
   decode the CTU based on the predicted chroma PU.

2. A device for video encoding, comprising:
   a processor configured to:

   determine that a cross-component convolution mode (CCCM) is enabled for a chroma prediction unit (PU) in a coding tree unit (CTU), wherein a dual tree mode is enabled for the CTU;
determine a luma PU that is collocated with the chroma PU;
determine a set of reference luma samples associated with the chroma PU;
add a plurality of padding luma samples to the set of reference luma samples to generate a modified set of reference luma samples, wherein the plurality of padding luma samples is generated based on one or more reference luma samples of the set of reference luma samples, and a padding luma sample of the plurality of padding luma samples is not replaced by a previously reconstructed luma sample in the CTU;
generate a CCCM filter coefficient based on the modified set of reference luma samples;
predict the chroma PU based on the CCCM filter coefficient and the luma PU; and
encode the CTU based on the predicted chroma PU.

3. The device of claim 1 or claim 2, wherein the CTU is in a slice, and the processor is further configured to:

determine that the dual tree mode is enabled for the CTU comprising the chroma PU;
determine that the slice is not an intra-slice; and
based on a determination that the dual tree mode is enabled for the CTU and the determination that the slice is not the intra-slice, disable a replacement of the padding luma sample of the plurality of padding luma samples with the previously reconstructed luma sample in the CTU, wherein the chroma PU is predicted based on the disablement of the replacement of the padding luma sample of the plurality of padding luma samples.

4. The device of claim 1 or claim 2, wherein the CTU is a first CTU, and the processor is further configured to:

determine that the dual tree mode is enabled for a second CTU comprising a chroma PU, wherein the second CTU is in a slice;
determine a set of reference luma samples in the second CTU;
add a plurality of padding luma samples to the set of reference luma samples in the second CTU, wherein the plurality of padding luma samples is generated based on the one or more reference luma samples of the set of reference luma samples in the second CTU;
determine that the slice is an intra-slice;
based on a determination that the dual tree mode is enabled for the second CTU and the determination that the slice is the intra-slice, modify the plurality of padding luma samples by replacing a padding luma sample of the plurality of padding luma samples with a previously reconstructed luma sample in the second CTU; and
predict the chroma PU based on the set of reference luma samples in the second CTU and the modified plurality of padding luma samples.

5. The device of claim 1 or claim 2, wherein the CTU is a first CTU, and the processor is further configured to:

determine that the dual tree mode is enabled for a second CTU comprising a chroma PU, wherein the second CTU is in a slice;
determine a set of reference luma samples in the second CTU;
add a plurality of padding luma samples to the set of reference luma samples in the second CTU, wherein the plurality of padding luma samples is generated based on one or more reference luma samples of the set of reference luma samples in the second CTU;
determine that the slice is an intra-slice;
determine that the chroma PU and a padding luma sample of the plurality of padding luma samples are located within a virtual pipeline decoding unit (VPDU);
based on a determination that the dual tree mode is enabled for the second CTU, the determination that the slice is the intra-slice, and the determination that the chroma PU and the padding luma sample of the plurality of padding luma samples are located within the VPDU, modify the plurality of padding luma samples by replacing the padding luma sample of the plurality of padding luma samples with a previously reconstructed luma sample in the VPDU; and
predict the chroma PU based on the set of reference luma samples in the second CTU and the modified plurality of padding luma samples.

6. The device of claim 1 or claim 2, wherein the CTU is a first CTU, and the processor is further configured to:

determine that the dual tree mode is enabled for a second CTU comprising a chroma PU;
determine whether a local dual tree mode is enabled for the chroma PU in the second CTU, wherein, in the local dual tree mode, the dual tree mode is not enabled for an entirety of the second CTU, and the dual tree mode is enabled for a region within the second CTU; and

based on a determination that the local dual tree mode is enabled for the chroma PU in the second CTU, determine the region for which the dual tree mode is enabled, wherein the region is within the chroma PU; determine a set of reference luma samples in the second CTU;

add a plurality of padding luma samples to the set of reference luma samples in the second CTU, wherein the plurality of padding luma samples is generated based on one or more reference luma samples of the set of reference luma samples in the second CTU;

based on a determination that the chroma PU in the second CTU is in the determined region within the second CTU, modify the plurality of padding luma samples by replacing a padding luma sample of the plurality of padding luma samples with a previously reconstructed luma sample in the region within the second CTU; and

predict the chroma PU based on the set of reference luma samples in the second CTU and the modified plurality of padding luma samples.

7. The device of claim 6, wherein the processor is further configured to determine a multiple type tree (MTT) partition depth associated with the local dual tree mode, and wherein the region within the second CTU is determined further based on the MTT partition depth.

8. The device of claim 1 or claim 2, wherein the CTU is a first CTU, and the processor is further configured to:

determine that the dual tree mode is enabled for a second CTU comprising a chroma PU;

determine whether a local dual tree mode is enabled for the chroma PU in the second CTU, wherein, in the local dual tree mode, the dual tree mode is not enabled for an entirety of the second CTU, and the dual tree mode is enabled for a region within the second CTU; and

based on a determination that the local dual tree mode is not enabled for the chroma PU in the second CTU, determine the region for which the dual tree mode is enabled as the second CTU;

determine a set of reference luma samples in the second CTU;

add a plurality of padding luma samples to the set of reference luma samples in the second CTU, wherein the plurality of padding luma samples is generated based on one or more reference luma samples of the set of reference luma samples in the second CTU;

modify the plurality of padding luma samples by replacing a padding luma sample of the plurality of padding luma samples with a previously reconstructed luma sample in the second CTU; and

predict the chroma PU based on the set of reference luma samples in the second CTU and the modified plurality of padding luma samples.

9. The device of claim 1 or claim 2, wherein the set of reference luma samples associated with the chroma PU is determined based on a block vector associated with the CTU.

10. The device of claim 1, wherein the CTU is a first CTU, and the processor is further configured to:

determine that a cross-component prediction (CCP) merge mode is enabled for a chroma PU in a second CTU, wherein a dual tree mode is enabled for the second CTU;

determine a luma PU that is collocated with the chroma PU, wherein the luma PU comprises a set of luma samples;

determine a set of reference luma samples based on a previously decoded video block in the second CTU; generate a CCCM filter coefficient based on the set of reference luma samples;

add a plurality of padding luma samples to the set of luma samples of the luma PU to generate a modified set of luma samples, wherein the plurality of padding luma samples is generated based on one or more luma samples of the set of luma samples of the luma PU, and a padding luma sample of the plurality of padding luma samples is not replaced by a previously reconstructed luma sample in the second CTU;

predict the chroma PU in the second CTU based on the CCCM filter coefficient and the modified set of luma samples in the second CTU; and

decode the second CTU based on the predicted chroma PU in the second CTU.

11. The device of claim 1 or claim 2, wherein the processor is further configured to:

determine a plurality of coordinates associated with a reference area of the chroma PU, wherein the set of reference luma samples is determined based on the plurality of coordinates associated with the reference area and by downsampling previously reconstructed luma samples; and

determine a plurality of locations including right of top, right of left, below left, below right of the reference area, wherein the plurality of locations are within the CTU, the plurality of padding luma samples is generated for the plurality of locations and by duplicating the one or more reference luma samples of the set of reference luma samples, wherein the chroma PU is predicted by applying the CCCM filter coefficient on a set of luma samples associated with the chroma PU, and wherein the set of luma samples is determined by downsampling the luma PU based on a chroma format associated with the CTU.

12. A method for video decoding, comprising:

determining that a cross-component convolution mode (CCCM) is enabled for a chroma prediction unit (PU) in a coding tree unit (CTU), wherein a dual tree mode is enabled for the CTU;

determining a luma PU that is collocated with the chroma PU;

determining a set of reference luma samples associated with the chroma PU;

adding a plurality of padding luma samples to the set of reference luma samples to generate a modified set of reference luma samples, wherein the plurality of padding luma samples is generated based on one or more reference luma samples of the set of reference luma samples, and a padding luma sample of the plurality of padding luma samples is not replaced by a previously reconstructed luma sample in the CTU;

generating a CCCM filter coefficient based on the modified set of reference luma samples;

predicting the chroma PU based on the CCCM filter coefficient and the luma PU; and

decoding the CTU based on the predicted chroma PU.

13. A method for video encoding, comprising:

determining that a cross-component convolution mode (CCCM) is enabled for a chroma prediction unit (PU) in a coding tree unit (CTU), wherein a dual tree mode is enabled for the CTU;

determining a luma PU that is collocated with the chroma PU;

determining a set of reference luma samples associated with the chroma PU;

adding a plurality of padding luma samples to the set of reference luma samples to generate a modified set of reference luma samples, wherein the plurality of padding luma samples is generated based on one or more reference luma samples of the set of reference luma samples, and a padding luma sample of the plurality of padding luma samples is not replaced by a previously reconstructed luma sample in the CTU;

generating a CCCM filter coefficient based on the modified set of reference luma samples;

predicting the chroma PU based on the CCCM filter coefficient and the luma PU; and

encoding the CTU based on the predicted chroma PU.

14. The method of claim 12 or claim 13, wherein the CTU is in a slice, and the method further comprises:

determining that the dual tree mode is enabled for the CTU comprising the chroma PU;

determining that the slice is not an intra-slice; and

based on a determination that the dual tree mode is enabled for the CTU and the determination that the slice is not the intra-slice, disabling a replacement of the padding luma sample of the plurality of padding luma samples with the previously reconstructed luma sample in the CTU, wherein the chroma PU is predicted based on the disablement of the replacement of the padding luma sample of the plurality of padding luma samples.

15. The method of claim 12 or claim 13, wherein the CTU is a first CTU, and the method further comprises:

determining that the dual tree mode is enabled for a second CTU comprising a chroma PU, wherein the second CTU is in a slice;

determining a set of reference luma samples in the second CTU;

adding a plurality of padding luma samples to the set of reference luma samples in the second CTU, wherein the plurality of padding luma samples is generated based on the one or more reference luma samples of the set of reference luma samples in the second CTU;

determining that the slice is an intra-slice;

based on a determination that the dual tree mode is enabled for the second CTU and the determination that the slice is the intra-slice, modifying the plurality of padding luma samples by replacing a padding luma sample of the plurality of padding luma samples with a previously reconstructed luma sample in the second CTU; and

predicting the chroma PU based on the set of reference luma samples in the second CTU and the modified plurality of padding luma samples.

**100**

**FIG. 1A**

EP 4 629 621 A1

116

122

102

120
Transceiver

124
Speaker/
Microphone

134
Power
Source

126
Keypad

118
Processor

136
GPS
Chipset

128
Display/
Touchpad

138
Peripherals

130
Non-
Removable
Memory

132
Removable
Memory

# FIG. 1B

**FIG. 1C**

**FIG. 1D**

EP 4 629 621 A1

FIG. 2

200

201 Pre-encoding processing

202 Image Partitioning

210 +/−

225 Transform

230 Quantization

240 Inverse Quantization

250 Inverse Transform

255

245 Entropy Coding

260 Intra prediction

265 In-loop Filters

280 Reference Picture Buffer

205

270 Motion Compensation

275 Motion Estimation

**300**

**FIG. 3**

EP 4 629 621 A1

**400**

FIG. 4

Processor 410

Memory 420

Display 470

Display 475

Encoder/Decoder 430

Storage Device 440

Audio 480

Speaker 485

Peripheral Interface 490

Peripherals 495

Communications Interface 450

Communications channel 460

RF, COMP, USB, HDMI 445

425

FIG. 5

FIG. 6

2Nx2N     NxN     2NxN     Nx2N

nLx2N     nRx2N     2NxnU     2NxnD

**FIG. 7**

**FIG. 8**

VER_TRIPLE

HOR_TRIPLE

**FIG. 9**

VER_TRIPLE

HOR_TRIPLE

VER

HOR

QT_SPLIT

NO_SPLIT

**FIG. 10**

FIG. 11

EP 4 629 621 A1

FIG. 12

620

FIG. 13

610

EP 4 629 621 A1

| 1 | 0 | -1 | | 1 | 2 | 1 | | 2 | 1 | -1 | | -1 | 1 | 2 |
|---|---|---|---|---|---|---|---|---|---|---|---|---|---|---|
| 1 | 0 | -1 | | -1 | -2 | -1 | | 1 | -1 | -2 | | -2 | -1 | 1 |

**FIG. 14**

630

| NW | N | NE |
|----|---|----|
| W | C | E |
| SW | S | SE |

**FIG. 15**

640

$L_0$ $L_1$ $L_2$

$C$

$L_3$ $L_4$ $L_5$

**FIG. 16**

FIG. 17

FIG. 18

Chroma PU to predict
in cross-component
convolution mode

1902

1904

Compute set of reference and co-
located luma samples

1906 — Compute Cross-Component Convolutional
filtering model to be used for cross-component
prediction of current chroma PU, based on
computed reference luma samples and originbal
chroma PU

1908 — Apply computed model on computed
co-located luma samples to predict
chroma PU in Cb component

1910 — Apply computed model on computed
co-located luma samples to predict
chroma PU in Cr component

1912 — END

# FIG. 19

Chroma PU to
predict in cross-
component
convolution mode

Calculate coordinates of reference Area
of current chroma PU

Compute down-sampled luma samples for
the area covering both PU and top/left
reference areas with top and left padding

Pad Right of top, right of left, below left
and below right of reference area

Pad right and below of current PU

Chroma PU in dual-tree ?    *no*

*yes*

Override padded samples of right of top, right
of left, below left and below right of reference
area, if located inside current CTU and inside
current picture

Override padded samples of right and
below current PU if located inside
current CTU and inside current picture

END

# FIG. 20

Chroma PU to predict in cross-component convolution mode — 2102 →

2104

Calculate coordinates of reference Area of current chroma PU

2106 — Compute down-sampled luma samples for the area covering both PU and top/left reference areas with top and left padding

2108 — Pad Right of top, right of left, below left and below right of reference area

2110 — Pad right and below of current PU

2112 — END

# FIG. 21

Chroma PU to predict in cross-component convolution mode

2202

2204

Calculate coordinates of reference Area of current chroma PU

2206 — Compute down-sampled luma samples for the area covering both PU and top/left reference areas with top and left padding

2208 — Pad Right of top, right of left, below left and below right of reference area

2210 — Pad right and below of current PU

2212 — Chroma PU in dual-tree and current slice is Intra ?

*no*

*yes*

2214 — Override padded samples of right of top, right of left, below left and below right of reference area, if located inside current CTU and inside current picture

2216 — Override padded samples of right and below current PU if located inside current CTU and inside current picture

2218 — END

# FIG. 22

Chroma PU to predict in cross-component convolution mode

2302

2304

Calculate coordinates of reference Area of current chroma PU

2306 — Compute down-sampled luma samples for the area covering both PU and top/left reference areas with top and left padding

2308 — Pad Right of top, right of left, below left and below right of reference area

2310 — Pad right and below of current PU

2312 — Chroma PU in dual-tree and current slice is Intra ? — *no*

*yes*

2314 — Override padded samples of right of top, right of left, below left and below right of reference area, if located inside current VPDU and inside current picture

2316 — Override padded samples of right and below current PU if located inside current VPDU and inside current picture

2318 — END

# FIG. 23

**FIG. 24**

Chroma PU to predict in cross-component convolution mode

2402

2404 → Calculate coordinates of reference Area of current chroma PU

2406 → Compute down-sampled luma samples for the area covering both PU and top/left reference areas with top and left padding

2408 → Pad Right of top, right of left, below left and below right of reference area

2410 → Pad right and below of current PU

Chroma PU in dual-tree mode ?

no

2412

*yes*

Chroma PU in local dual-tree mode ?

*yes* →

2414

2418 → Obtain local dual tree root (QT depth and MTT depth) of current chroma PU

2416 → Compute dual-tree spatial region of current chroma PU as current CTU

Compute dual-tree spatial region associated to current chroma PU

2420

2422 → Override padded samples of right of top, right of left, below left and below right of reference area, if located inside current cual-tree region

2424 → Override padded samples of right and below current PU if located inside current dual-tree region

2426 → END

Europäisches
Patentamt

European
Patent Office

Office européen
des brevets

# EUROPEAN SEARCH REPORT

**Application Number**

EP 24 30 5533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/017006 A1 (MEDIATEK INC [CN]) 25 January 2024 (2024-01-25) * page 5, line 30 - line 32 * * page 1, line 21 - page 2, line 7 * * page 7, line 1 - page 9, line 32 * ----- | 1-15 | INV. H04N19/105 H04N19/132 H04N19/186 H04N19/593 H04N19/82 |
| X | WO 2023/249901 A1 (BEIJING DAJIA INTERNET INFORMATION TECH CO LTD [CN]) 28 December 2023 (2023-12-28) * paragraph [0121] - paragraph [0134] * * paragraph [0200] - paragraph [0255] * ----- | 1-15 | |
| X | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG2025 ; m66954 29 March 2024 (2024-03-29), XP030316747, Retrieved from the Internet: URL:https://jvet-experts.org/doc_end_user/documents/33_Teleconference/wg11/JVET-AG2025-v1.zip JVET-AG2025-v1.docx [retrieved on 2024-03-29] * Sections 3.1.13, 3.1.13.2, 3.1.13.6 * ----- | 1-15 | **TECHNICAL FIELDS SEARCHED (IPC)** H04N |

The present search report has been drawn up for all claims

| Place of search | Date of completion of the search | Examiner |
|---|---|---|
| Munich | 27 August 2024 | Vaquero, Raquel |

EPO FORM 1503 03.82 (P04C01)

## ANNEX TO THE EUROPEAN SEARCH REPORT
## ON EUROPEAN PATENT APPLICATION NO.

EP 24 30 5533

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2024

| Patent document cited in search report | Publication date | Patent family member(s) | | Publication date |
|---|---|---|---|---|
| WO 2024017006 A1 | 25-01-2024 | TW<br>WO | 202420818 A<br>2024017006 A1 | 16-05-2024<br>25-01-2024 |
| WO 2023249901 A1 | 28-12-2023 | NONE | | |

For more details about this annex : see Official Journal of the European Patent Office, No. 12/82